# EUROPÄISCHE PATENTSCHRIFT

(11) **EP 3 443 628 B1**
(45) Veröffentlichungstag und Bekanntmachung des Hinweises auf die Patenterteilung: **09.09.2026**
(21) Anmeldenummer: 17717369.7
(22) Anmeldetag: 10.04.2017
(51) Int. Cl.: H02H 3/08, H02H 7/085, H02H 3/20, B24B 55/10, B24B 7/18, B24B 47/12, B24B 49/10, H02K 9/22, B23Q 11/00

(54) **HAND-WERKZEUGMASCHINE MIT EINEM TRENNSCHALTER**
HAND-HELD MACHINE TOOL COMPRISING A DISCONNECTOR
MACHINE-OUTIL PORTATIVE POURVUE D'UN SECTIONNEUR

(30) Priorität: 11.04.2016 DE 102016106558
(43) Veröffentlichungstag der Anmeldung: 20.02.2019
(73) Patentinhaber: Festool GmbH, 73240 Wendlingen (DE)
(72) Erfinder: WALKER, Nico, 73230 Kirchheim (DE); TULODZIECKI, Stefan, 73765 Neuhausen (DE); KRÄMER, Bernhard, 72622 Nürtingen (DE)
(74) Vertreter: Patentanwälte Bregenzer und Reule Partnerschaftsgesellschaft mbB
(86) Internationale Anmeldenummer: PCT/EP2017/058508
(87) Internationale Veröffentlichungsnummer: WO 2017/178411

(56) Entgegenhaltungen:
- EP-A1- 1 970 168
- WO-A2-2013/098228
- WO-A2-2015/179364
- DE-A1- 102013 202 434
- DE-U1- 29 816 673
- US-A1- 2014 225 549
- US-A1- 2015 137 635

## Beschreibung

Die Erfindung betrifft eine Hand-Werkzeugmaschine, insbesondere eine Schleifmaschine, gemäß dem Oberbegriff des Anspruchs 1.

Eine derartige Hand-Werkzeugmaschine in Gestalt eines Wand- und Deckenschleifgeräts ist beispielsweise in US 2014/0225549 A1 beschrieben.

Am Bearbeitungskopf einer Hand-Werkzeugmaschine aus DE 10 2007 012 394 A1 ist der Antriebsmotor beispielsweise in Richtung des Handgriffelements abstehend angeordnet. Über eine Schalteranordnung direkt am Handgriffelement ist es möglich, den Antriebsmotor einzuschalten, auszuschalten sowie dessen Drehzahl einzustellen.

Wenn der Antriebsmotor beispielsweise überlastet ist, kann ein Schaltelement der Bestromungseinrichtung den Antriebsmotor abschalten. Allerdings kann dieses Schaltelement der Bestromungseinrichtung in manchen Fällen zu spät reagieren.

Es ist daher die Aufgabe der vorliegenden Erfindung, eine verbesserte Hand-Werkzeugmaschine bereitzustellen.

Zur Lösung der Aufgabe ist eine Hand-Werkzeugmaschine gemäß der technischen Lehre des Anspruchs 1 vorgesehen.

Die Erfindung ist durch den unabhängigen Anspruch definiert. Vorteilhafte Ausführungsformen sind Gegenstand der abhängigen Ansprüche.

Es ist dabei ein Grundgedanke, dass lokal am Antriebsmotor ein Trennschalter vorgesehen ist, der eine elektrische Leitung der Leitungsanordnung elektrisch deaktivieren kann. Die Bestromungseinrichtung kann also die Erregerspulenanordnung mit Strom versorgen, so dass der Rotor des Antriebsmotors dreht. Wenn jedoch eine Störung am Antriebsmotor auftritt, beispielsweise eine Überhitzung oder dergleichen, schaltet der Trennschalter lokal und direkt am Antriebsmotor die Stromversorgung dieser einen Phase ab, der der Trennschalter zugeordnet ist, sodass der Antriebsmotor geschützt ist. Es versteht sich, dass nicht nur ein Trennschalter, sondern durchaus auch mehrere Trennschalter vorhanden sein können. Beispielsweise kann zwischen zwei voneinander separaten Leitungen und der durch diese versorgten separaten Phasen der Erregerspulenanordnung jeweils ein Schalter vorgesehen sein. So ist jede dieser Phasen von der sie versorgenden Leitung durch einen Trennschalter trennbar oder elektrisch isolierbar.

Eine eventuelle oder zweckmäßigerweise vorgesehene Datenleitung oder Sensorleitung vom Antriebsmotor zur Bestromungseinrichtung, über die Störungen beim Antriebsmotor der Bestromungseinrichtung gemeldet werden können, ist nicht notwendig.

Das Konzept arbeitet sehr schnell, d.h. dass der jeweilige Trennschalter schon vor einer möglichen Zerstörung oder Beschädigung des Antriebsmotors aktiv schaltet und/oder die elektrische Stromversorgung für die ihm zugeordnete Phase trennt.

Vorteilhaft ist vorgesehen, dass an dem Antriebsmotor außer dem mindestens einen Trennschalter kein, insbesondere über eine Datenleitung, mit der Bestromungseinrichtung kommunizierender Überwachungssensor zur Überwachung des Antriebsmotors angeordnet ist.

Bevorzugt handelt es sich bei mindestens einem der Trennschalter oder dem Trennschalter um einen thermisch betätigbaren Schalter, der in Abhängigkeit von einer vorbestimmten Temperatur die Leitung von der ihr zugeordneten Phase der Erregerspulenanordnung trennt. Wenn also der Antriebsmotor zu überhitzen droht, schaltet der Trennschalter die Stromversorgung für die ihm zugeordnete Phase ab. Der thermisch betätigbare Schalter umfasst beispielsweise einen Bimetall-Schalter. Dieser umfasst vorteilhaft ein Bimetall-Element, welches unmittelbar elektrische Kontakte des Trennschalters miteinander verbindet oder voneinander trennt und/oder mindestens einen elektrischen Kontakt aufweist.

Der Trennschalter kann aber auch ein elektrisch betätigbarer Schalter sein oder einen solchen Schalter umfassen, der bei Überschreiten einer vorbestimmten Spannung und/oder eines vorbestimmten Stromflusses die Leitung von der ihr zugeordneten Phase trennt. Beispielsweise erfasst der Schalter einen Stromfluss durch eine Spule der Spulenanordnung, die durch die Leitung mit Strom versorgt wird, oder einen Stromfluss in der Leitung selbst. Weiterhin kann der Schalter auch eine Spannung erfassen, so dass beispielsweise bei einer Überspannung über einen vorbestimmten Wert hinaus der Schalter die Leitung und die ihm zugeordnete Phase voneinander trennt.

Es versteht sich, dass auch eine Kombination von Schaltern zur Bildung des Trennschalters möglich ist oder dass ein Trennschalter vorgesehen sein kann, der mehrere Funktionen aufweist, d.h. beispielsweise thermisch und elektrisch betätigbar ist. Unterschiedlich funktionale Schalter können beispielsweise in Reihe geschaltet sein, sodass bei der zu überwachenden Leitung oder Phase bei mehreren Arten von Störungen eine Abschaltung erfolgt, d.h. sowohl im Falle einer Überhitzung (thermisches Abschalten) als auch beispielsweise im Falle einer elektrischen Gefahrensituation (Abschalten/Trennen bei zu großer Spannung oder zu großem Strom).

Es ist möglich, dass der Trennschalter nicht nur zwischen eine Leitung und deren zugeordnete Phase geschaltet ist, sondern zwischen zwei oder weitere Leitungen und deren zugeordnete Phasen. Der Trennschalter ist also bei dieser Ausgestaltung vorzugsweise zum Trennen elektrischer Verbindungen zwischen mindestens zwei elektrischen Leitungen der Leitungsanordnung und der über diese Leitungen mit Strom versorgbaren Phasen der Erregerspulenanordnung ausgestaltet. Der Trennschalter weist also beispielsweise elektrische Kontaktpaare auf, von denen jeweils ein Kontaktpaar einer Verbindung zwischen einer elektrischen Leitung und der durch diese Leitung versorgten Phase der Erregerspulenanordnung geschaltet ist.

Weiterhin ist eine Anordnung mit zwei oder mehreren Trennschaltern möglich, die beispielsweise in Serie oder Reihe hintereinander und zwischen die Leitung und die ihr zugeordnete Phase geschaltet sind. Ohne weiteres können bei zwei oder mehreren Phasen der Erregerspulenanordnung derartige Reihenschaltungen von Trennschaltern vorgesehen sein.

Wie bereits erwähnt können mehrere Trennschalter auch unterschiedlich betätigbar sein. Beispielsweise umfasst eine Anordnung von zwei oder weiteren Trennschaltern einen Trennschalter, der durch eine erste physikalische, beispielsweise thermische, Einwirkung betätigbar ist, während der andere Trennschalter durch eine zweite physikalische Einwirkung, beispielsweise eine elektrische Einwirkung (Strom, Spannung oder dergleichen) betätigbar ist.

Bevorzugt ist es, wenn der mindestens eine Trennschalter an einem Stator, beispielsweise einem Blechpaket, des Antriebsmotors angeordnet ist. Möglich wäre aber auch eine Anordnung des Trennschalters unmittelbar an der Erregerspulenanordnung des Antriebsmotors, beispielsweise zur Erfassung eines Stromflusses oder einer Spannung. Durch die Anordnung direkt an einer Erregerspule kann aber auch eine Überhitzung sehr schnell durch den Trennschalter erfasst werden.

Ein bevorzugtes Konzept sieht vor, dass der mindestens eine Trennschalter in einem Schutzgehäuse angeordnet ist. Somit ist der Trennschalter beispielsweise vor mechanischen Beschädigungen geschützt. Das Schutzgehäuse kann mehrteilig sein, das heißt beispielsweise eine Gehäusebasis und einen Gehäusedeckel aufweisen, sodass es leicht geöffnet und geschlossen werden kann. Die Gehäuseteile des Schutzgehäuses sind vorzugsweise miteinander verrastet oder verrastbar. Das Schutzgehäuse hat vorzugsweise eine Aufnahmekammer, in der der Trennschalter vollständig aufgenommen ist, d.h. von allen Seiten her ummantelt. Das Schutzgehäuse kann aber auch ein Teilgehäuse sein, das den Trennschalter beispielsweise abdeckt, wobei der Trennschalter vorzugsweise mit einer Seite direkt am Antriebsmotor befestigt ist, beispielsweise dessen Stator.

Das Schutzgehäuse hat zweckmäßigerweise zwei Gehäuseteile, beispielsweise ein thermisch leitfähiges Gehäuseteil und/oder ein thermisch isolierendes Gehäuseteil, zwischen denen der Trennschalter angeordnet ist. Das thermisch leitfähige Gehäuseteil ist an dem Antriebsmotor angeordnet, während das thermisch isolierende Gehäuseteil an einer vom Antriebsmotor abgewandten Seite des Schutzgehäuses vorgesehen ist. Auf diese Weise wird beispielsweise Wärme vom Antriebsmotor zum im Gehäuse aufgenommenen Trennschalter geleitet. Von außen her kommende Wärme, die den Trennschalter ansonsten unerwünscht auslösen könnte, d.h. den Trennschalter zum Trennen der Verbindung zwischen dem Leiter und der Phase der Erregerspulenanordnung betätigen könnte, wird somit von dem Schutzgehäuse abgehalten.

Weiterhin ist es vorteilhaft, wenn der Trennschalter, insbesondere das Schutzgehäuse, an einer vom Antriebsmotor abgewandten Seite thermisch und/oder elektrisch isoliert ist. Beispielsweise hat das Schutzgehäuse dort ein entsprechendes thermisch isolierendes Kunststoffmaterial. Auch ohne ein Schutzgehäuse ist es möglich, eine derartige thermische oder elektrische Isolation zu realisieren. Beispielsweise könnte eine Umspritzung oder ein Deckel mit einem entsprechend isolierenden Kunststoff an dem Trennschalter als thermische und/oder elektrische Isolation dienen.

Ein vorteilhaftes Konzept sieht vor, dass zwischen dem mindestens einen Trennschalter und einer elektrischen oder mechanischen Komponente des Antriebsmotors, zum Beispiel dessen Stator oder Erregerspulenanordnung, ein Wärmeleitelement angeordnet ist. Das Wärmeleitelement ist beispielsweise als ein Kissen oder als ein Pad ausgestaltet. Das Wärmeleitelement ist beispielsweise vollflächig oder im Wesentlichen vollflächig zwischen dem Schutzgehäuse und der mechanischen Komponente des Antriebsmotors angeordnet.

Bevorzugt ist es, wenn der Trennschalter durch eine Federanordnung, beispielsweise eine Feder, in Richtung einer Komponente, beispielsweise des Stators, des Antriebsmotors belastet ist. Somit wird der Trennschalter beispielsweise für eine thermisch optimale Übertragung in Richtung des Stators oder der sonstigen Komponente durch die Federanordnung gedrückt.

Wie schon erwähnt, kann ein Wärmeleitelement zwischen dem Trennschalter und dem Antriebsmotor vorgesehen sein. Bevorzugt ist dieses oder ein sonstiges Ausgleichsmittel zum Herstellen eines im Wesentlichen vollflächigen Kontaktes zwischen dem Trennschalter und einer Komponente, beispielsweise des Stators, des Antriebsmotors vorgesehen.

Es ist vorgesehen, dass die Bestromungseinrichtung eine Stromüberwachungseinrichtung zum Erkennen eines Stromflusses auf der mit dem mindestens einen Trennschalter verbundenen Leitung aufweist. Wenn also der Trennschalter beispielsweise den Stromfluss zwischen dieser Leitung und der Phase der Erregerspulenanordnung trennt, fließt kein Strom mehr.

Es ist vorgesehen, dass die Bestromungseinrichtung zum Abschalten weiterer Leitungen, insbesondere aller Leitungen zwischen der Bestromungseinrichtung und dem Antriebsmotor in Abhängigkeit von einem Stromfluss über die mit dem mindestens einen Trennschalter verbundene Leitung ausgestaltet ist. Wenn also beispielsweise die Stromüberwachungseinrichtung feststellt, dass kein Strom mehr über die Leitung, die vom Trennschalter abgeschaltet ist, zum Stator bzw. die Erregerspulenanordnung fließt, schaltet sie auch die übrigen Leitungen ab. Es ist vorteilhaft, wenn die Bestromungseinrichtung dann, wenn der Trennschalter in die Trennstellung geht, ganz abschaltet.

Die Bestromungseinrichtung weist beispielsweise eine Mikroprozessorsteuerung auf, die auf derartige Betriebszustände reagieren kann. Ein Mikroprozessor der Mikroprozessorsteuerung führt z.B. Programmcode eines Steuerprogramms zur Steuerung der Bestromungseinrichtung aus.

Es kann auch vorgesehen sein, dass die Bestromungseinrichtung beispielsweise anhand eines Schaltverhaltens elektronischer Schalter ihrer Kommutierungseinrichtung erkennt, dass der mindestens eine Trennschalter in die Trennstellung gegangen ist, also die ihm zugeordnete Phase der Erregerspulenanordnung von der ihm zugeordneten Leitung getrennt hat.

Zweckmäßigerweise ist vorgesehen, dass die Erregerspulenanordnung des Antriebsmotors mehrere Erregerspulen aufweist, wobei der elektrische Trennschalter den einzigen am Antriebsmotor angeordneten Trennschalter zum Trennen einer Verbindung zwischen der Bestromungseinrichtung und dem Antriebsmotor bildet und/oder am Antriebsmotor kein weiterer Trennschalter zum Trennen einer Verbindung zwischen der Bestromungseinrichtung und dem Antriebsmotor angeordnet ist.

Die Hand-Werkzeugmaschine weist zweckmäßigerweise ein stabförmiges Handgriffelement zum Ergreifen durch einen Bediener und einen über eine Gelenkanordnung an dem Handgriffelement beweglich gelagerten Bearbeitungskopf, auf, der einen elektrischen Antriebsmotor zum Antreiben einer zum Halten eines Bearbeitungswerkzeugs vorgesehenen Werkzeugaufnahme aufweist.

Vorteilhaft ist vorgesehen, dass der Antriebsmotor ein bürstenloser Motor ist und in einem Abstand zu dem Antriebsmotor an dem Handgriffelement eine Bestromungseinrichtung für den Antriebsmotor angeordnet ist, die über eine Leitungsanordnung mit dem Antriebsmotor verbunden ist.

Vorteilhaft ist bei diesem Konzept, dass der bürstenlose Motor eine optimale Leistungsabgabe bei relativ geringem Gewicht aufweist. Er ist außerdem anhand der Bestromungseinrichtung optimiert in Bezug auf Leistungsabgabe und/oder Drehzahl bestrombar.

Vorteilhaft ist zwischen dem Antriebsmotor und der Werkzeugaufnahme ein drehzahlreduzierendes Getriebe zu einer Drehzahlreduktion einer Drehzahl eines Abtriebs des Antriebsmotors gegenüber einer Drehzahl der Werkzeugaufnahme angeordnet. Dabei ist es vorteilhaft, dass direkt am Bearbeitungskopf ein Getriebe angeordnet ist, über welches die Werkzeugaufnahme angetrieben ist. Das Getriebe ist ein eine Drehzahl des Antriebsmotors verringerndes Getriebe, insbesondere ein Zahngetriebe. Dadurch kann der Antriebsmotor mit einer gegenüber der Werkzeugaufnahme höheren Drehzahl drehen, welche vom Getriebe zur Werkzeugaufnahme hin reduziert wird, wobei zugleich das Drehmoment der Werkzeugaufnahme größer wird. Dadurch kann ein kleiner, kompakter Antriebsmotor Verwendung finden, dessen Drehmoment kleiner als das an der Werkzeugaufnahme abgegebene Drehmoment ist.

Neben der Funktion, die Drehzahl des Antriebsmotors gegenüber der Werkzeugaufnahme zu verringern, kann das Getriebe auch weitere Funktionen erfüllen oder entsprechende Getriebebestandteile umfassen. So ist beispielsweise vorteilhaft möglich, dass das Getriebe ein eine hyperzykloide Bewegung oder sich überlagerte Drehbewegungen der Werkzeugaufnahme erzeugendes Getriebe und/oder ein eine exzentrische Bewegung der Werkzeugaufnahme erzeugendes Getriebe umfasst oder entsprechende Getriebebestandteile aufweist. Mithin kann also beispielsweise ein Exzentergetriebe und/oder ein Hyperzykloid-Getriebe Bestandteil des Getriebes sein oder mit dem Getriebe verbunden sein.

Eine alternative Bezeichnung für den bürstenlosen Motor ist "elektronisch kommutierter Motor" (engl. electronically commutated motor) oder EC-Motor, ferner Brushless DC Motor, (BLDC- oder BL-Motor). Der bürstenlose Motor hat keine Schleifkontakte oder Bürsten. Zwischen einer gehäusefesten Erregerspulenanordnung oder einem Stator des bürstenlosen Motors und dessen Rotor sind keine elektrischen Verbindungen notwendig, beispielsweise Schleifringe, Bürsten oder dergleichen. Der bürstenlose Motor verschleißt also nicht oder jedenfalls deutlich weniger als ein konventioneller Universalmotor oder Kommutator-Motor.

An dem Antriebsmotor kann mindestens ein Sensor, beispielsweise ein magnetischer oder optischer Sensor, zur Erfassung einer Drehwinkelposition des Rotors relativ zum Stator oder Rotorposition relativ zum Stator vorgesehen sein.

Die Bestromungseinrichtung umfasst beispielsweise einen sogenannten elektronischen Kommutator.

Die Kommutierung ist vorzugsweise sensorlos, das heißt dass am Antriebsmotor selbst bzw. dessen Erregerspulenanordnung keine Sensoren zur Erfassung einer Rotorposition notwendig sind, beispielsweise magnetische Sensoren zur Erfassung des magnetischen Flusses des Rotors, optische Sensoren oder dergleichen. Ferner ist keine Datenleitung zur Übertragung von Sensorsignalen eines Sensors, der direkt am Antriebsmotor angeordnet ist, zu der Bestromungseinrichtung notwendig und/oder vorgesehen. Wenn die Bestromungseinrichtung und der Antriebsmotor weit voneinander entfernt sind, ist dadurch eine vereinfachte Leitungsführung möglich.

Es ist aber auch eine sensorbehaftete oder sensorgesteuerte Kommutierung der Bestromungseinrichtung ohne weiteres möglich. In diesem Fall ist dann mindestens ein Sensor am Antriebsmotor vorhanden, der eine Drehwinkelposition des Rotors bezüglich des Stators bzw. der Erregerspulenanordnung erfasst und über eine Datenleitung an die Bestromungseinrichtung als Datensignal meldet.

Es ist vorteilhaft, wenn die Bestromungseinrichtung unmittelbar neben oder an einem Handgriffbereich zum Ergreifen des Handgriffelements durch einen Bediener angeordnet ist. Die Bestromungseinrichtung kann sich auch beispielsweise zwischen zwei Handgriffbereichen befinden, die üblicherweise vom Bediener ergriffen werden, zum Beispiel wenn der Bediener die Hand-Werkzeugmaschine mit zwei Händen oder zweihändig führt. Die Handgriffbereiche sind vorteilhaft an Griffstab-Abschnitten eines Griffstabs vorgesehen, zwischen denen die Bestromungseinrichtung angeordnet ist.

Vorteilhaft ist es, wenn die Bestromungseinrichtung in einem Gehäuse angeordnet ist. Das Gehäuse ist beispielsweise an einem Griffstab des Handgriffelements angeordnet.

Die Bestromungseinrichtung umfasst beispielsweise eine Anordnung mehrerer Halbbrücken und/oder mehrerer leistungselektronischer Schalter, beispielsweise MosFets oder dergleichen. Ferner kann die Bestromungseinrichtung beispielsweise einen elektrischen Transformator und/oder andere Komponenten zur Aufbereitung einer Netzspannung oder einer Spannung eines Energiespeichers umfassen. Diese Komponenten haben in der Praxis durchaus ein beträchtliches Gewicht.

Durch die Anordnung der Bestromungseinrichtung am Handgriffelement ergibt sich eine günstige Schwerpunktlage, das heißt, dass ein die Bestromungseinrichtung aufweisendes Gehäuse vom Bediener unmittelbar ergriffen werden kann oder nahe an einem Handgriffbereich angeordnet ist, der vom Bediener üblicherweise bei der Bedienung und Nutzung der Hand-Werkzeugmaschine genutzt wird.

Zweckmäßigerweise weist die Hand-Werkzeugmaschine eine Anschlusseinrichtung zum Anschließen an ein elektrisches Energieversorgungsnetz, insbesondere ein Wechselspannungsnetz, auf. Im Rahmen einer Aufbereitung einer Versorgungsspannung des Energieversorgungsnetzes wandelt die Bestromungseinrichtung beispielsweise die Wechselspannung in eine Zwischenkreis-Gleichspannung um.

Alternativ oder ergänzend ist es auch möglich, dass die Hand-Werkzeugmaschine einen Energiespeicher-Anschluss für einen elektrischen Energiespeicher, zum Beispiel einen Akkupack, eine Brennstoffzelle oder dergleichen, aufweist. Dadurch ist die Hand-Werkzeugmaschine unabhängig von einem Stromversorgungsnetz betreibbar.

Ein bevorzugtes Konzept sieht vor, dass die Leitungsanordnung für jede Phase einer Erregerspulenanordnung des Antriebsmotors jeweils Leiter oder exakt einen Leiter umfasst. So können beispielsweise bei einer dreiphasig anzusteuernden Erregerspulenanordnung insgesamt drei Leiter oder exakt drei Leiter vorgesehen sein. Eine Anzahl der Phasen des Antriebsmotors entspricht also vorzugsweise exakt einer Anzahl der Leiter der Leitungsanordnung. Ohne weiteres kann der Antriebsmotor aber auch nur eine oder zwei Phasen aufweisen oder mehr als drei Phasen, beispielsweise sechs Phasen. In diesem Fall sind dann ein Leiter, zwei Leiter oder sechs Leiter bei der Leitungsanordnung vorgesehen. Denkbar ist bei jeder der vorherigen Konfigurationen jedoch, dass noch ein zusätzlicher Masseleiter einen Bestandteil der Leitungsanordnung bildet und als Rückleiter für die stromführenden, zur Bestromung der Erregerspulenanordnung vorgesehenen Leiter dient. Jedenfalls ist es vorteilhaft, wenn die Leitungsanordnung nur wenige Leitungen oder Leiter umfasst. Dies erleichtert beispielsweise eine Abschirmung der Leitungsanordnung und/oder Kontakte zwischen Abschnitten der Leitungsanordnung, wenn nämlich das Handgriffelement mehrteilig ist, beispielsweise voneinander lösbare und/oder beweglich aneinander gelagerte Handgriffelemente aufweist.

Die Leitungsanordnung umfasst also zweckmäßigerweise ausschließlich zur Bestromung des Antriebsmotors vorgesehene Leitungen.

Bevorzugt ist es, wenn die Leitungen, welche die Phasen der Erregerspulenanordnung mit Strom versorgen, durch eine oder mehrere elektromagnetisch schirmende Abschirmungsvorrichtungen geschirmt sind. Beispielsweise verlaufen die Leitungen in einem elektromagnetisch schirmenden Schlauch oder Geflecht. Ohne weiteres möglich ist es, jede der Leitungen elektromagnetisch individuell abzuschirmen. Vorteilhaft ist es jedoch, wenn mehrere Leitungen gemeinsam abgeschirmt sind. Individuell geschirmte Leitungen können aber auch durch eine mindestens zwei Leitungen gemeinsam schirmende Abschirmungsvorrichtung verlaufen. Die mindestens eine Abschirmungsvorrichtung schützt die Umgebung der Leitungsanordnung vor elektromagnetischen Einflüssen und umgekehrt die Leitungsanordnung vor elektromagnetischen Einflüssen aus der Umwelt.

Es ist möglich, dass die Leitungsanordnung mindestens eine Datenleitung umfasst oder dass mindestens eine Datenleitung zwischen dem Bearbeitungskopf und der Bestromungseinrichtung verläuft. Über eine Datenleitung sind beispielsweise ein Sensorsignal oder mehrere Sensorsignale von mindestens einem Sensor am Antriebsmotor übertragbar. Das Sensorsignal kann beispielsweise von einem Sensor stammen, der eine Temperatur und/oder Drehzahl und/oder eine Drehposition des Rotors des Antriebsmotors oder eine sonstige Funktionsgröße des Antriebsmotors zu der Bestromungseinrichtung überträgt. Eine derartige Datenleitung kann beispielsweise ein Bestandteil der Leitungsanordnung bilden.

Zwischen dem Antriebsmotor und der Bestromungseinrichtung verläuft jedoch zweckmäßigerweise bevorzugt keine ausschließlich zur Datenübertragung und nicht zur Bestromung des Antriebsmotors dienende Datenleitung. Somit kann also die Leitungsführung beispielsweise auf diejenigen stromführenden Leitungen beschränkt werden, die zur Bestromung der Erregerspulenanordnung des Antriebsmotors notwendig sind. Es ist also besonders bevorzugt, wenn keine Datenleitung notwendig ist.

Vorteilhaft ist vorgesehen, dass die Bestromungseinrichtung und der Antriebsmotor jeweils eine Kühlungseinrichtung, beispielsweise einen oder mehrere Lüfter, aufweisen. Somit ist also eine Kühlung der Bestromungseinrichtung unabhängig von einer Kühlung des Antriebsmotors. Die Kühlungseinrichtungen arbeiten voneinander unabhängig, sodass beispielsweise die Bestromungseinrichtung und der Antriebsmotor individuell und bedarfsgerecht kühlbar sind. Durch den Abstand zwischen Bestromungseinrichtung und Werkzeugaufnahme, die nahe beim Antriebsmotor ist, ergibt sich der Vorteil, dass beispielsweise durch die Nutzung des Bearbeitungswerkzeugs entstehender Staub, Späne oder dergleichen nicht unmittelbar in die Bestromungseinrichtung gelangen können, so dass sie dort beispielsweise deren Kühlungseinrichtung oder Lüfter verschmutzen. Vorteilhaft ist es weiterhin, wenn an der Motorwelle des Antriebsmotors ein Lüfterrad drehfest angeordnet ist. Somit treibt der Antriebsmotor sozusagen seinen Lüfter selbst an.

Der Abstand zwischen der Bestromungseinrichtung und dem Bearbeitungskopf ist vorzugsweise relativ lang. Beispielsweise ist dieser Abstand mindestens zweimal oder dreimal so groß wie ein Durchmesser des Bearbeitungskopfs. Eine andere Möglichkeit, diesen größeren Abstand auszudrücken, ist es, wenn vorgesehen ist, dass der Abstand zwischen Bestromungseinrichtung und Bearbeitungskopf mindestens zweimal oder dreimal der Länge der Bestromungseinrichtung und/oder deren Gehäuse entspricht.

Vorteilhaft ist es, wenn der Antriebsmotor in einem ihn elektromagnetisch schirmenden Gehäuse angeordnet ist.

Vorteilhaft ist bei der Hand-Werkzeugmaschine ein Energiespeicher-Anschluss für einen elektrischen Energiespeicher, beispielsweise einen Akkupack, und/oder eine Anschlusseinrichtung zum Anschließen an ein elektrisches Energieversorgungsnetz, von beispielsweise 220-240 V oder 110-120 V oder einem anderen Wechselspannungsnetz vorhanden.

Vorteilhaft ist es, wenn eine Drehachse des Abtriebs des Antriebsmotors und eine Drehachse der Werkzeugaufnahme parallel zueinander sind. Das Getriebe braucht in diesem Fall keine Winkelumlenkung realisieren, das heißt dass beispielsweise ein an sich relativ lautes Winkelgetriebe nicht notwendig ist. Zudem werden Getriebebauteile eingespart. Es ist aber auch möglich, dass die Drehachse des Abtriebs und die Drehachse der Werkzeugaufnahme in einem kleinen Winkel zueinander orientiert sind, beispielsweise von maximal 10° oder maximal 20° oder maximal 30°.

Insbesondere ist es zweckmäßig, wenn der Antriebsmotor vor eine von der Bearbeitungsseite des Bearbeitungswerkzeugs abgewandten Oberseite des Bearbeitungskopfs nach oben absteht.

Bevorzugt ist eine Konfiguration, bei der der Antriebsmotor nicht über eine Bearbeitungsfläche, beispielsweise eine Schleiffläche, Polierfläche oder dergleichen, des Bearbeitungswerkzeugs zur Seite hin oder quer zur Drehachse der Werkzeugaufnahme vorsteht. Weiterhin ist es zweckmäßig, wenn der Antriebsmotor nicht über eine Abdeckung, beispielsweise eine Schutzhaube oder Absaughaube, für das Bearbeitungswerkzeug quer zur Drehachse der Werkzeugaufnahme vorsteht.

Zweckmäßigerweise ist der Antriebsmotor außerhalb eines Schwerpunkts oder Zentrums des Bearbeitungskopfs angeordnet. Bevorzugt ist der Antriebsmotor sozusagen außermittig am Bearbeitungskopf vorgesehen.

Vorteilhaft ist vorgesehen, dass der Antriebsmotor neben mindestens einer Schwenkachse der Gelenkanordnung an dem Bearbeitungskopf angeordnet ist. Diese Schwenkachse ist vorzugsweise eine quer zur Längsachse des Handgriffelements verlaufende Schwenkachse. Dies kann dazu beitragen, dass der Bearbeitungskopf freier gegenüber dem Handgriffelement beweglich ist. Eine vorteilhafte Anordnung sieht vor, dass die Schwenkachse, neben der der Antriebsmotor angeordnet ist, zwischen dem Antriebsmotor und einer an den Bearbeitungskopf angeschlossenen Leitungsanordnung verläuft.

Es ist auch möglich, dass der Antriebsmotor in einer Ebene einer anderen Schwenkachse der Gelenkanordnung angeordnet ist, beispielsweise einer zu der vorgenannten Schwenkachse quer, insbesondere rechtwinkelig quer verlaufenden Schwenkachse. In dieser Ebene ist beispielsweise auch die Längsachse des Handgriffelements vorgesehen.

Eine an sich eigenständige Erfindung in Zusammenhang mit dem Oberbegriff des Anspruchs 1, aber auch eine vorteilhafte Weiterbildung der bisherigen Maßnahmen stellt folgendes dar:
Bevorzugt ist der Antriebsmotor in einem Motorgehäuse angeordnet, an welchem mindestens ein Schutzkörper zur Dämpfung eines auf das Motorgehäuse einwirkenden mechanischen Schlages vorgesehen ist. Vor dem Motorgehäuse kann alternativ oder ergänzend auch mindestens ein Schutzbügel zum Schützen des Motorgehäuses vor mechanischer Belastung angeordnet sein. Somit ist der Antriebsmotor bzw. dessen Motorgehäuse vorteilhaft vor Schlägen und anderen mechanischen Einwirkungen geschützt.

Der Schutzkörper kann beispielsweise ein Aufpralldämpfer sein.

Zweckmäßigerweise besteht der Schutzkörper aus einem elastischen Material, beispielsweise einem elastischen Kunststoffmaterial und/oder Gummi.

Bevorzugt hat der Schutzkörper eine ringförmige Gestalt.

Zweckmäßigerweise ist der Schutzkörper an einem von einer Bearbeitungsseite des Bearbeitungskopfs abgewandten Bereich des Motorgehäuses angeordnet. Beispielweise ist der dort als eine Art Schutzmanschette, als ein Schutzring oder dergleichen ausgestaltet und angeordnet. Bevorzugt ist der Schutzkörper als ein von dem Motorgehäuse lösbares Steckbauteil ausgestaltet, welches an eine Steckaufnahme des Motorgehäuses ansteckbar ist. An dem Motorgehäuse ist dementsprechend eine Steckaufnahme vorgesehen. Vorteilhaft ist weiterhin eine Verklemmung und/oder Verrastung des Schutzkörpers an dem Motorgehäuse vorhanden, das heißt es sind Klemmmittel und/oder Rastmittel vorgesehen. Bei Bedarf kann der Schutzkörper dann leicht ausgetauscht werden, beispielsweise gegen einen elastischeren Schutzkörper oder einen unbeschädigten Schutzkörper.

Der Antriebsmotor weist vorteilhaft einen Stator mit einer Erregerspulenanordnung und einen Rotor mit einer Motorwelle auf, die einen Abtrieb zum Antreiben der Werkzeugaufnahme aufweist.

Zweckmäßigerweise ist ein Lüfterrad mit der Motorwelle drehfest verbunden oder dreh-gekoppelt ist, wobei die Motorwelle an ihren Längsendbereichen mit einem im Bereich des Abtriebs angeordneten Abtriebslager und einem am andern Längsendbereich angeordneten Motorlager bezüglich des Stators drehbar gelagert ist.

Vorzugsweise ist vorgesehen, dass die Erregerspulenanordnung zwischen dem Lüfterrad und dem Abtrieb der Motorwelle angeordnet ist und das Lüfterrad zur Erzeugung eines den Antriebsmotor vom Lüfterrad zum Abtrieb hin durchströmenden Kühlluftstroms ausgestaltet ist.

Der Vorteil dieses Konzeptes ist es, dass das Lüfterrad ein Bestandteil eines Drucklüfter bildet oder einen Drucklüfter darstellt, d.h. dass die Luft von der von der Werkzeugaufnahme abgewandten Seite angesaugt wird und anschließend sozusagen durch den Stator hindurch gedrückt wird, um insbesondere die Erregerspulenanordnung zu kühlen. Die Kühlluft wird von einem sozusagen relativ sauberen Bereich, d.h. dort, wo relativ wenig Späne, Staub und dergleichen vorhanden sind, angesaugt, sodass eine Verschmutzung des Motors deutlich geringer ist oder sogar vermieden wird.

Weiterhin ist bei diesem Konzept vorteilhaft, dass der Antriebsmotor beispielsweise nur zwei Lager braucht, nämlich ein Abtriebslager nahe beim Abtrieb und ein davon entferntes Motorlager. Das Motorlager bildet gleichzeitig ein Lager für denjenigen Motorwellen-Abschnitt, der mit dem Lüfterrad drehgekoppelt ist oder an dem das Lüfterrad drehfest befestigt ist. Das Abtriebslager kann nahe bei einem Getriebe sein, sodass dort kein weiteres Lager zur Abstützung der Motorwelle notwendig ist.

Prinzipiell denkbar ist es, dass der Abtrieb die Werkzeugaufnahme direkt antreibt.

Bevorzugt ist jedoch ein Konzept mit einem Getriebe. Zweckmäßigerweise ist vorgesehen, dass der Abtrieb zum Antreiben der Werkzeugaufnahme mit einem Getriebe dreh-gekoppelt ist, welches die Werkzeugaufnahme antreibt. Das Getriebe ist oder umfasst beispielsweise ein Zahnradgetriebe, insbesondere ein Kegelradgetriebe und/oder ein eine Drehzahl des Antriebsmotors bezüglich der Werkzeugaufnahme reduzierendes oder erhöhendes Getriebe.

Durch die Anordnung des Antriebsmotors zwischen dem Lüfterrad und dem Getriebe können beispielsweise Dichtungen und/oder Lager eingespart werden.

Vorteilhaft ist es, wenn das Getriebe zur Kapselung oder zum Staubschutz des Antriebsmotors beiträgt und/oder selbst gegen Staub abgedichtet ist. Beides trägt dazu bei, dass der Verschleiß der Hand-Werkzeugmaschine geringer ist.

Das Getriebe bildet zweckmäßigerweise ein gekapseltes Modul. Eine bevorzugte Maßnahme sieht beispielsweise vor, dass das Getriebe in einem gekapselten, insbesondere staubdichten, Getriebegehäuse angeordnet ist. Das Getriebegehäuse weist beispielsweise Gehäuseteile oder Gehäusewände auf, die einen Innenraum des Getriebegehäuses begrenzen, in welchem die beweglichen Komponenten, beispielsweise Zahnräder, Lager oder dergleichen, geschützt aufgenommen sind. Lediglich an den Schnittstellen nach außen, dort wo der Abtrieb des Antriebsmotors angeordnet ist oder ein Abtrieb für die Werkzeugaufnahme und die Werkzeugaufnahme selbst, sind Öffnungen vorhanden. Auch diese Öffnungen können vorteilhaft durch gekapselte und/oder staubdichte Lager verschlossen sein. Eine Dichtungsanordnung zwischen den Gehäuseteilen des Getriebegehäuses, insbesondere eine Dichtung mit einem O-Ring, kann eine zusätzliche Abdichtung des Getriebegehäuses bilden.

Ferner ist es vorteilhaft, wenn eine Wand zwischen dem Getriebe und dem Stator des Antriebsmotors angeordnet ist und bezüglich des Kühlluftstroms dicht ist. Der Kühlluftstrom strömt also nicht vom Antriebsmotor in das Getriebe ein. Die Wand kann - wie später noch deutlich wird - beispielsweise von einem Deckel des Motorgehäuses gebildet sein. Weiterhin kann die Wand auch durch eine Gehäusewand des Getriebegehäuses gebildet sein. Kombinationen sind möglich. Es kann vorgesehen sein, dass eine Gehäusewand des Getriebegehäuses und ein Deckel oder eine Deckwand des Motorgehäuses nebeneinander und/oder aufeinander liegen und die Wand zwischen Getriebe und Stator bilden.

Vorteilhaft ist es, wenn zwischen dem Getriebe, beispielsweise dessen Getriebegehäuse und dem Antriebsmotor kein Abstand oder Lüfterrad vorhanden ist. Mithin ist es also vorteilhaft, wenn die Stirnseite des Antriebsmotors unmittelbar an das Getriebe, insbesondere dessen Getriebegehäuse angrenzt.

Besonders kompakt ist eine Anordnung, bei der der Abtrieb des Antriebsmotors ein Antriebsrad, beispielsweise ein Antriebsritzel, des Getriebes bildet. Das Abtriebsrad kann beispielsweise durch eine Verzahnung, die direkt an der Motorwelle angeordnet ist, gebildet sein oder an der Motorwelle unmittelbar angeordnet sein.

Es ist zweckmäßig, wenn ein Getriebegehäuse des Getriebes eine Einstecköffnung für den Abtrieb des Antriebsmotors aufweist. An der Einstecköffnung oder einer sonstigen Verbindung zwischen dem Abtrieb und dem Getriebegehäuse ist zweckmäßigerweise eine Dichtung für den Abtrieb vorgesehen. Somit kann der Abtrieb staubdicht mit dem Getriebe verbunden werden.

Bevorzugt ist vorgesehen, dass das Motorgehäuse zwischen dem Abtriebslager und der Erregerspulenanordnung angeordnete Ausströmöffnungen für den Kühlluftstrom aufweist. In diesem Zusammenhang kann es vorteilhaft sein, wenn ausschließlich derartige Ausströmöffnungen vorhanden sind, das heißt dass in Längsrichtung vor dem Abtriebslager keine Ausströmöffnung vorhanden ist.

Bevorzugt ist es insbesondere, wenn ausschließlich zwischen dem Abtriebslager und der Erregerspulenanordnung Ausströmöffnungen für den Kühlluftstrom vorgesehen sind. Diese Ausströmöffnungen sind vorzugsweise radial bezüglich der Motorwelle angeordnet und/oder ausgestaltet. Der Kühlluftstrom strömt also vom Motorlager her in Richtung des Abtriebslagers, jedoch nicht unmittelbar an diesem vorbei, was beispielsweise dazu beitragen kann, eine Verschmutzung oder sonstige Beeinträchtigung des Abtriebslagers durch den Kühlluftstrom zu vermindern oder zu vermeiden.

Bevorzugt ist es, wenn die Ausströmöffnungen insgesamt oder mindestens eine Ausströmöffnung zum Ausströmen des Kühlluftstroms radial bezüglich der Motorwelle angeordnet und/oder ausgestaltet sind. Somit strömt der Kühlluftstrom nicht oder nicht nur axial entlang der Längsachse der Motorwelle aus dem Motorgehäuse aus, sondern nach radial außen.

Bevorzugt ist es, wenn mindestens eine Ausströmöffnung oder alle Ausströmöffnungen zum Ausströmen des Kühlluftstroms zu einem Arbeitsbereich der Hand-Werkzeugmaschine gerichtet sind, so dass der aus der mindestens einen Ausströmöffnung oder den Ausströmöffnungen ausströmende Kühlluftstrom den Arbeitsbereich zumindest teilweise frei bläst. Bevorzugt ist es, wenn die Ausströmöffnungen oder die mindestens eine Ausströmöffnung in Arbeitsrichtung der Hand-Werkzeugmaschine nach vorn gerichtet sind. Weiterhin ist es vorteilhaft, wenn auch seitlich der Arbeitsbereich durch den Kühlluftstrom freiblasbar ist. Beispielsweise erstrecken sich die Ausströmöffnungen über einen Winkelbereich an dem Motorgehäuse derart, dass sowohl der Arbeitsbereich unmittelbar in Arbeitsrichtung vorn vor der Hand-Werkzeugmaschine durch den Kühlluftstrom freiblasbar ist, als auch in einem Winkelbereich von beispielsweise 10-40° seitlich zu einer in Arbeitsrichtung nach vorn gerichteten Achslinie. Insbesondere ist es vorteilhaft, wenn die Ausströmöffnungen bogenförmig um die Motorwelle angeordnet sind, insbesondere in einem Umfangsbereich von 30-180° des Motorgehäuses.

Vorteilhaft ist es, wenn die Ausströmöffnungen radial beabstandet zu einem Außenumfang des Stators sind. Beispielsweise haben an dem Motorgehäuse angeordnete Ausströmöffnungen einen Abstand zu einem Außenumfang des Stators, der mindestens einem halben Radius, vorzugsweise etwa einem ganzen Radius, des Außenumfangs des Stators zu der Motorwelle entspricht. Der dadurch gewonnene Raum zwischen Stator und Ausströmöffnungen oder Motorgehäuse kann beispielsweise für elektrische Leitungen, Schutzbeschaltungen und dergleichen genutzt werden. Diese werden gleichzeitig gekühlt.

Ein besonders einfach realisierbares Lagerkonzept sieht vor, dass möglichst wenig Lager beim Antriebsmotor notwendig sind. Beispielsweise ist es vorteilhaft, wenn die Motorwelle an exakt zwei Lagern gelagert ist und/oder anhand ausschließlich des Motorlagers und des Abtriebslagers. Weitere Lager sind in diesem Fall nicht vorhanden. Insbesondere ist es vorteilhaft, wenn das Lüfterrad nicht durch ein separates Lager gelagert sein muss, sondern unmittelbar an der Motorwelle angeordnet und durch das Motorlager gelagert ist. Beispielsweise ist das Lüfterrad nicht zwischen dem Motorlager und einem weiteren Lager angeordnet. Allerdings ist es durchaus möglich, dass für das Lüfterrad mindestens ein zu dem Motorlager zusätzliches Lager vorgesehen ist.

Bevorzugt ist es, wenn der Rotor in einer Rotoraufnahme des Stators aufgenommen ist, die an zumindest einem Längsendbereich der Motorwelle, zweckmäßigerweise beiden Längsendbereichen der Motorwelle, staubdicht ist oder gegenüber der Umwelt abgedichtet ist.

Zwischen dem Stator und dem Rotor kann beispielsweise eine Labyrinthdichtung vorgesehen sein. Beispielsweise ist ein Strömungslabyrinth zwischen dem Rotor und dem Stator vorhanden, so dass die Kühlluft nicht oder nur unwesentlich in einem Zwischenraum zwischen Rotor und Stator hineinströmen kann.

Weiterhin ist es zur Abdichtung des Rotoraufnahmeraumes vorteilhaft, wenn das Abtriebslager und/oder das Motorlager an einem Lagerdeckel angeordnet sind und der Lagerdeckel selbst und/oder das jeweils vom Lagerdeckel gehaltene Abtriebslager oder Motorlager die Rotoraufnahme des Stators, in welcher der Rotor aufgenommen ist, verschließt, bevorzugt staubdicht. Eine Kombination ist also ohne weiteres möglich, das heißt dass sowohl der Lagerdeckel als auch das jeweilige Lager eine Dichtigkeit bewirken. Weiterhin kann zudem noch die vorgenannte Labyrinthdichtung zwischen Rotor und Stator vorgesehen sein. Als Lagerdeckel wird beispielsweise eine stirnseitige Abdeckung der Rotoraufnahme verstanden, zu der die Längsachse der Motorwelle winkelig verläuft. Der Lagerdeckel kann integral mit einem Statorkörper des Stators sein, d.h. dass die Rotoraufnahme beispielsweise als eine Vertiefung am Statorkörper ausgestaltet ist. Bevorzugt ist mindestens einer der Lagerdeckel als ein an dem Statorkörper montiertes Bauteil ausgestaltet.

Ein vorteilhaftes Konzept sieht vor, dass das Abtriebslager und/oder das Motorlager als abgedichtete oder staubdichte Lager ausgebildet sind. Beispielsweise sind entsprechende Dichtscheiben oder Dichtringe vorgesehen. Ein Vorteil ist auch, wenn das Abtriebslager oder das Motorlager oder beide die bereits erwähnte Rotoraufnahme, in der der Rotor innerhalb des Stators aufgenommen ist, dicht, insbesondere staubdicht, verschließen. Mithin tragen also die beiden Lager oder eines der Lager zur Staubdichtigkeit der Rotoraufnahme vorteilhaft bei.

Es ist zweckmäßig, wenn die in das Motorgehäuse zum Antriebsmotor einströmende Luft gefiltert wird. Vorzugsweise ist vorgesehen, dass das Motorgehäuse im Bereich des Lüfterrads, beispielsweise an einem dort vorgesehenen Gehäusedeckel, eine Einströmöffnung aufweist, an der eine Halterung zum lösbaren Halten eines Filterelements angeordnet ist. Das Filterelement dient zum Filtern von die Einströmöffnung durchströmende Luft. Beispielsweise umfasst das Filterelement einen Papierfilter und/oder ein Filtergitter und/oder ein Filtergewebe oder dergleichen. An der Einströmöffnung kann zusätzlich oder alternativ zu dem Filterelement auch ein Einlassgitter, beispielsweise umfassend mehrere Rippen, vorgesehen sein. Das Einlassgitter kann als Stütze für das Filterelement dienen.

Die Halterung umfasst zweckmäßigerweise eine Haltespange, mit der das Filterelement gehalten werden kann. Das Filterelement kann die Haltespanne integral umfassen.

Weiterhin ist es zweckmäßig, wenn die Halterung Rastmittel zum Verrasten mit dem Motorgehäuse umfasst.

Das Motorgehäuse bildet vorzugsweise ein Maschinengehäuse der Hand-Werkzeugmaschine. Bevorzugt ist das Motorgehäuse oder Maschinengehäuse das sozusagen äußerste oder äußere Bauteil. Mithin ist also das Maschinengehäuse nicht in einem zusätzlichen Gehäuse aufgenommen, welches es einhaust. Beispielsweise ist das Motorgehäuse ein Maschinengehäuse eines Bearbeitungskopfes der Hand-Werkzeugmaschine.

Zweckmäßigerweise ist vorgesehen, dass in dem Motorgehäuse ein Strömungsgehäuse oder ein Luftführungskörper oder beides zum Führen der Kühlluft angeordnet sind. Das Strömungsgehäuse oder der Luftführungskörper sind beispielsweise hülsenartig. Bevorzugt ist der Stator zumindest teilweise in dem Strömungsgehäuse oder Luftführungskörper aufgenommen. Das Strömungsgehäuse oder der Luftführungskörper sind vorzugweise dazu vorgesehen, die Kühlluft am Außenumfang des Stators oder der Erregerspulenanordnung vorbeizuführen.

An dieser Stelle sei bemerkt, dass die Erregerspulenanordnung vorzugsweise Luftkanäle zum Durchlassen von Kühlluft zwischen ihren Erregerspulen aufweist.

Bevorzugt weist die Hand-Werkzeugmaschine einen Griffstab mit einer Längsachse auf oder umfasst einen derartigen Griffstab, wobei der Absaugschlauch im Verbindungsbereich mit dem Endbereich des Handgriffelements entlang dieser Längsachse verläuft. An dem Griffstab kann beispielsweise ein flexibler Saugschlauch angeordnet sein. Es ist aber auch möglich, dass das Handgriffelement einen biegesteifen Rohrkörper aufweist, in welchem ein mit dem Absaugschlauch zum Bearbeitungskopf hin in Strömungsverbindung stehender Absaugkanal verläuft. Der Rohrkörper kann beispielsweise als Profilrohr, insbesondere als biegesteifes Profilrohr ausgestaltet sein. Der Rohrkörper eignet sich in diesem Fall zum Ergreifen durch den Bediener. Mithin bildet also das Profilrohr einen Tragkörper oder eine tragfähige Komponente des Handgriffelements.

Das Handgriffelement weist zweckmäßigerweise mindestens einen Absaugkanal auf, der in Richtung einer Längsachse des Handgriffelements, beispielsweise in dem oben genannten flexiblen Saugschlauch oder dem Rohrkörper, verläuft und an seinem dem Bearbeitungskopf zugewandten Endbereich des Handgriffelements stirnseitig aus dem Handgriffelement ausmündet. Dort ist der Absaugschlauch zum Bearbeitungskopf hin mit dem Absaugkanal verbunden.

Bevorzugt ist jedoch das Handgriffelement zumindest an seinem dem Bearbeitungskopf zugewandten Endbereich als Absaugrohr ausgestaltet oder weist ein Absaugrohr auf. Mit diesem Absaugrohr ist der Absaugschlauch, der zum Bearbeitungskopf führt, verbunden.

Die Hand-Werkzeugmaschine ist vorzugweise eine Schleifmaschine, Poliermaschine oder Fräsmaschinen. Insbesondere ist die Hand-Werkzeugmaschine bevorzugt mit Handgriffelement ausgestattet, das vom Bearbeitungskopf oder Motorgehäuse absteht.

Das Handgriffelement kann einteilig oder mehrteilig sein. Vorzugsweise ist oder umfasst das Handgriffelement einen Griffstab. Der Griffstab kann ein einteiliges Bauteil sein oder mehrere Stababschnitte aufweist, die lösbar voneinander sind und/oder anhand von Lagern relativ zueinander beweglich sind, sodass der Griffstab beispielsweise bei Nichtgebrauch zerlegt und/oder in eine kompakte Form gefaltet werden kann.

Nachfolgend wird ein Ausführungsbeispiel der Erfindung anhand der Zeichnung erläutert. Es zeigen:
- Figur 1: eine perspektivische Darstellung einer Schleifmaschine, von der in
- Figur 2: ein Bearbeitungskopf, beispielsweise ein Schleifkopf, perspektivisch dargestellt ist,
- Figur 3: eine Seitenansicht der Schleifmaschine mit in einer Basisposition befindlichem Bearbeitungskopf, der in Teilansichten gemäß
- Figur 4: in einer ersten, aus der Basisposition verstellten Auslenkposition und
- Figur 5: in einer zweiten, aus der Basisposition verstellten Auslenkposition dargestellt ist,
- Figur 6: eine Seitenansicht des Bearbeitungskopfs,
- Figur 7: eine Explosionsdarstellung eines Antriebs des Bearbeitungskopfs der Schleifmaschine,
- Figur 8: den Bearbeitungskopf der Schleifmaschine mit einer Gelenkanordnung in Explosionsdarstellung,
- Figur 9: die Gelenkanordnung der Schleifmaschine in Explosionsdarstellung,
- Figur 10: einen Antriebsmotor der Schleifmaschine mit einer Schutzschaltungen in Explosionsdarstellung,
- Figur 11: einen Querschnitt durch den Antriebsmotor gemäß Figur 6 etwa entlang einer Schnittlinie A-A,
- Figur 12: einen oberen Abschnitt eines Motorgehäuses des Bearbeitungskopfs schräg von hinten,
- Figur 13: eine perspektivische Schrägansicht von oben auf eine Motorbaugruppe des Bearbeitungskopfs mit dem Antriebsmotor, von dem in
- Figur 14: eine Querschnittsansicht, etwa entlang einer Schnittlinie F-F in Figur 13, dargestellt ist,
- Figur 15: eine Ansteuerschaltung für den Antriebsmotor,
- Figur 16: Griffstabteile eines Griffstabs für die Schleifmaschine in noch nicht gestecktem Zustand perspektivisch von schräg oben,
- Figur 17: die Anordnung gemäß Figur 16, jedoch im gesteckten Zustand,
- Figur 18: perspektivische Detaildarstellungen der in den Figuren 16 und 17 dargestellten Griffstabteile.

Das Ausführungsbeispiel bezieht sich auf eine Hand-Werkzeugmaschine 10 in Gestalt einer Schleifmaschine, wobei in Bezug auf manche Teilaspekte der nachfolgenden Beschreibung jedoch andere Ausführungsformen von Handwerkzeugmaschinen auch möglich sind, beispielsweise Fräsmaschinen, Poliermaschinen oder dergleichen. Weiterhin ist beim Ausführungsbeispiel ein lang gestrecktes Handgriffelement dargestellt, das durchaus kürzer oder länger sein kann. Die Hand-Werkzeugmaschine gemäß der Zeichnung ist zur Deckenbearbeitung oder Wandbearbeitung vorteilhaft. Man kann die Hand-Werkzeugmaschine 10 gemäß der Zeichnung auch als eine Decken-und/oder Wandschleifmaschine bezeichnen. Aspekte der nachfolgenden Ausführungen beziehen sich nicht unbedingt ausschließlich auf Schleifmaschinen, Poliermaschinen oder Fräsmaschinen, sondern können auch bei anderen Hand-Werkzeugmaschinen angewendet werden.

Die Hand-Werkzeugmaschine 10 weist einen Bearbeitungskopf 11 auf, der an einem Handgriffelement 12 anhand einer Gelenkanordnung 13 gelenkig gelagert ist, vorliegend zwar nicht schiebebeweglich, was im Prinzip möglich wäre, jedoch um zumindest eine Schwenkachse, im konkreten Ausführungsbeispiel sogar um zwei Schwenkachsen. Das Handgriffelement 12 ist stabförmig ausgestaltet. Es hat eine Längserstreckung oder Längsachse L. Das langgestreckte Handgriffelement 12 ermöglicht es, den Bearbeitungskopf 11 in großem Abstand vom Nutzer an einer Werkstückoberfläche O eines Werkstücks W, beispielsweise einer Wandoberfläche, entlang zu führen.

Die Gelenkanordnung 13 lagert den Bearbeitungskopf 11 bezüglich des Handgriffelements 12 anhand eines ersten Schwenklagers 14 um eine erste Schwenkachse S1 und anhand eines zweiten Schwenklagers 15 um eine zweite Schwenkachse S2. Anhand der Schwenklager 14, 15 kann der Bearbeitungskopf 11 relativ zum Handgriffelement 12 um die beiden Schwenkachsen S1 und S2 schwenken, wobei die Schwenkachsen S1 und S2 in einem rechten Winkel zueinander stehen. Prinzipiell wären aber auch andere als rechte Winkel denkbar. Die Schwenklager 14, 15 bilden vorteilhaft ein Kardanlager.

Die Schwenkachse S1 verläuft quer, vorliegend rechtwinkelig quer, zur Längsachse L des Handgriffelements 12. Die Schwenkachse S2 und die Längsachse L sind vorteilhaft in einer gemeinsamen Ebene angeordnet oder in zueinander parallelen Ebenen. Die Schwenkachse S2 und die Längsachse L schneiden sich vorliegend nicht.

Der Bearbeitungskopf 11 weist einen Tragkörper 16 auf, an welchem ein Antriebsmotor 17 gehalten ist. Der Antriebsmotor 100 treibt direkt oder vorliegend über ein Getriebe 80 eine Werkzeugaufnahme 19 um eine Drehachse D an. Die Werkzeugaufnahme 19 ist zum Halten eines Bearbeitungswerkzeugs 20 vorgesehen, das im an der Werkzeugaufnahme 19 montierten Zustand durch den Antriebsmotor 100 zu einer Drehbewegung antreibbar ist. Die Werkzeugaufnahme 19 umfasst beispielsweise eine Steckaufnahme, Bajonettkonturen, ein Schraubgewinde oder dergleichen andere an sich bekannte Montagemittel zum Montieren eines Bearbeitungswerkzeugs.

An dieser Stelle sei aber erwähnt, dass anstelle oder in Ergänzung der Drehbewegung der Werkzeugaufnahme 19 auch eine beispielsweise oszillierende Bewegung bei einer anderen Ausgestaltung eines Ausführungsbeispiels möglich ist. Weiterhin können auch überlagerte Drehbewegungen, beispielweise hyperzykloider Drehbewegungen, der Werkzeugaufnahme 19 realisierbar sein, wobei dann das Getriebe 80 entsprechend anders ausgestaltet ist, beispielsweise ein Exzentergetriebe aufweist.

Das Bearbeitungswerkzeug 20 ist vorliegend ein Schleifwerkzeug, insbesondere eine Schleifplatte. Das Bearbeitungswerkzeug 20 kann mehrere Komponenten enthalten, beispielsweise einen Schleifteller, an welchem eine Schleifscheibe oder ein Schleifblatt anordenbar ist. Dazu ist beispielsweise eine Klettverbindung zwischen dem Schleifteller und dem Schleifblatt vorteilhaft.

Durch das als Schleifwerkzeug ausgestaltete Bearbeitungswerkzeug 20 bildet die Hand-Werkzeugmaschine 10 eine Schleifmaschine 10A. Den Bearbeitungskopf 11 könnte man auch als einen Schleifkopf bezeichnen. Das langgestreckte, stabförmige Handgriffelement 12 erleichtert eine Bearbeitung von vom Bediener entfernten Flächen, beispielsweise Wandflächen. Die Hand-Werkzeugmaschine 10 bildet vorzugsweise ein Wand- und/oder Deckenschleifgerät. Die nachfolgend erläuterten Ausgestaltungen sind jedoch auch bei einer Vielzahl anders ausgestalteter Hand-Werkzeugmaschine, insbesondere Schleifmaschinen, aber auch Sägen, Bohrmaschinen oder dergleichen vorteilhaft.

Die Werkzeugaufnahme 19 und mithin das Bearbeitungswerkzeug 20, wenn es an der Werkzeugaufnahme 19 befestigt ist, sind vorzugsweise unter einer Abdeckung des Bearbeitungskopfs 11 angeordnet. Möglich wäre zum Beispiel, dass die Abdeckung 21 das Bearbeitungswerkzeug 20 über dessen gesamten Außenumfang und Oberseite abdeckt. Vorliegend ist eine bezüglich der Abdeckung 21 bewegliche Abdeckung 22, beispielsweise an einem vorderen, freien und vom Handgriffelement 12 abgewandten Bereich des Bearbeitungskopfes 11 vorgesehen. Die Abdeckung 22 ist zum Beispiel von der Abdeckung 21 entfernbar und/oder anhand eines Lagers beweglich zur Abdeckung 21 gelagert, beispielsweise um eine zu der Schwenkachse S2 parallele Schwenkachse. Eine Steckmontage der Abdeckung 22 an der Abdeckung 21 sieht beispielsweise Steckvorsprünge 22B, zum Beispiel Stecklaschen vor, die in Steckaufnahmen 21B der Abdeckung 21 einsteckbar sind, insbesondere mit den Steckaufnahmen 21B verrastbar sind.

Am äußeren Randbereich der Abdeckung 21, 22 kann eine Dichtung 22A, also Dichtelemente, zum Beispiel Bürsten, Dichtlippen oder dergleichen andere sich vorzugsweise an die Werkstückoberfläche O anpassende dichtende Elemente, vorgesehen sein. Es ist möglich, dass das Bearbeitungswerkzeug 20 vor die Dichtung 22A vorsteht.

Die Abdeckung 21, 22 ist beispielsweise an einer Unterseite der Tragplatte oder des Tragkörpers 16 befestigt oder mit dem Tragkörper 16 integral. An einer Oberseite, also von der Werkzeugaufnahme 19 abgewandt, sind am Tragkörper 16 ein Motorgehäuse 24 für den Antriebsmotor 100 und ein Absauganschluss 23 angeordnet.

An der von der Werkzeugaufnahme 19 abgewandten Oberseite des Motorgehäuses 24 ist ein Lufteinlass oder eine Einströmöffnung 25 zum Einlassen von den Antriebsmotor 100 kühlender Kühlluft angeordnet. Die Kühlluft K strömt beispielsweise über einen Luftauslassbereich 18 des Motorgehäuses 24 aus diesem heraus. Beispielsweise befindet sich der Luftauslassbereich 18 an einem zu der Einströmöffnung 25 winkeligen, beispielsweise am Außenumfang des Motorgehäuses 24 vorgesehenen Bereich. Prinzipiell möglich wäre es, dass die Kühlluft K bis zum durch die Abdeckungen 21, 22 eingehausten Bereich strömt und dort beispielsweise zur Kühlung des Bearbeitungswerkzeugs 20 oder auch zum Lösen von Staub beiträgt.

Der Luftauslassbereich 18 erstreckt sich sowohl in einer Arbeitsrichtung AR nach vorn, als auch seitlich dazu, beispielsweise über einen Winkelbereich von jeweils ca. 90° seitlich zur Arbeitsrichtung AR. Die Kühlluft K kann also einen sich in Arbeitsrichtung AR nach vorn und seitlich zur Arbeitsrichtung AR erstreckenden Arbeitsbereich AB frei blasen.

Über den Absauganschluss 23 können aus dem durch die Abdeckungen 21, 22 abgedeckten oder überdeckten Bereich Staub, Schmutz oder Späne abgesaugt werden. Der Absauganschluss 23 weist beispielsweise einen Stutzen 23A auf.

An den Absauganschluss 23 ist ein Absaugschlauch 26 mit einem Schlauchende 28 angeschlossen, der mit seinem anderen Schlauchende 27 mit dem Handgriffelement 12 verbunden ist.

Die Verbindung der Schlauchenden 27, 28 mit festen Strukturen, zum Beispiel dem Absauganschluss 23 und dem Handgriffelement 12, wird durch Strukturierungen 29, zum Beispiel Riffelungen, an den Schlauchelementen 27, 28 verbessert. Zur Befestigung des Schlauchendes 28 mit dem Absauganschluss 23 ist beispielsweise eine Klemme 30 vorgesehen, die anhand einer Schraube 30A in eine das Schlauchende 28 mit dem Stutzen 23A verklemmende Klemmstellung bringbar ist. Am anderen Schlauchende 27 sind beispielsweise ein hülsenförmiges Anschlussteil 31 sowie ein Verbindungsstutzen 32 zur Verbindung mit einem stabförmigen Kanalkörper 33 des Handgriffelements 12 vorgesehen, so dass ein aus dem Absauganschluss 23 ausströmender mit Schmutz beladener Saugstrom S in einen Strömungskanal 34 des Handgriffstücks 33 strömen kann.

An einander entgegengesetzten Längsendbereichen 12A und 12B des Handgriffelements 12 sind eine Handgriffpartie 35 und andererseits der Bearbeitungskopf 11 angeordnet.

Der stabförmige, lang gestreckte Kanalkörper 33 erstreckt sich zwischen der Gelenkanordnung 13 und der Handgriffpartie 35 des Handgriffelements 12. Die Handgriffpartie 35 ist zwischen dem Kanalkörper 33 und einem Kanalkörper 36 angeordnet, an welchem ein Absauganschluss 37 zum Anschließen eines Saugschlauches C vorgesehen ist. Der Saugschlauch C kann beispielsweise anhand einer Befestigungsanordnung 38 mit dem Kanalkörper 36 verbunden werden. Die Befestigungsanordnung 38 umfasst beispielsweise eine Klemmschelle, eine Hakenanordnung oder dergleichen.

An der Handgriffpartie 35 ist ein Schalter 39 zum Einschalten des Antriebsmotors 100 vorgesehen.

Im Bereich der Handgriffpartie 34 ist eine Bestromungseinrichtung 40 zur Bestromung einer Erregerspulenanordnung 120 des Antriebsmotors 100 angeordnet.

Über ein Netzkabel N, das beispielsweise an dem Saugschlauch C angeordnet oder in den Saugschlauch C integriert sein kann, ist die Bestromungseinrichtung 40 an ein elektrisches Versorgungsnetz V oder eine sonstige Stromquelle anschließbar. Bei der sonstigen Stromquelle kann es sich beispielsweise um einen Akkupack oder einen anderen Energiespeicher handeln, der an Bord der Hand-Werkzeugmaschine 10 sein kann.

Über Dioden D1, D2, D3 und D4 eines Gleichrichters G kann die Bestromungseinrichtung 40 beispielsweise aus einer durch das Versorgungsnetz V bereitgestellten Wechselspannung in bekannter Weise eine Gleichspannung UG gegenüber Masse oder einem Basispotenzial U0 erzeugen, wobei zwischen den Potenzialen UG und U0 vorteilhaft ein Kondensator C1 , beispielsweise ein Glättungskondensator oder Zwischenkreiskondensator, angeordnet ist.

An Leitungen mit den Potenzialen U1, U0 ist eine Endstufe E, z.B. ein Kommutator, angeschlossen, die über Leitungen L1, L2 und L3 Erregerströme I1, I2 und I3 für den Antriebsmotor 100 bereitstellt. Die Endstufe E umfasst beispielsweise Schalterpaare mit leistungselektronischen Schaltern, beispielsweise MosFETs, V1, V2 und V3, V4 und V5, V6 zwischen die jeweils die Leitungen L1, L2 und L3 in der Art von Halbbrücken angeschlossen sind.

Die Schalter V1-V6 werden durch eine Steuerung 170 über nicht dargestellte Steuerleitungen angesteuert. Die Steuerung 170 überwacht beispielsweise anhand einer Stromüberwachungseinrichtung 171 den Stromfluss auf der Leitung L1. Ohne weiteres könnten auch weitere Stromüberwachungseinrichtung, beispielsweise für die Leitungen L2 und L3 vorgesehen sein. Die Stromüberwachungseinrichtung 171 hat beispielsweise eine entsprechende Induktivität, um den Stromfluss auf der Leitung L1 zu erfassen.

Die Steuerung 170 umfasst zweckmäßigerweise ein Steuerungsprogramm 173, welches durch einen Mikrocontroller 172 der Steuerung 170 ausführbaren Programmcode umfasst. Durch Ausführung dieses Programmcodes kann die Steuerung 170 die Schalter V1-V6 geeignet ansteuern, um über einen entsprechenden Stromfluss auf den Leitungen L1 bis L3 eine Drehzahl und/oder Leistungsabgabe des Antriebsmotors 100 einzustellen. Aber auch das Schaltverhalten der Schalter V1-V6 kann für die Steuerung 170 ein Indiz sein, dass über eine oder mehrere der Leitungen L1 bis L3 kein Strom mehr fließt.

Die Leitungsanordnung 41 umfasst ein elektrisches Kabel 42, in welchem die Leitungen L1, L2 und L3 angeordnet sind. Das Kabel 42 verläuft von der Handgriffpartie 35 ausgehend in dem Kanalkörper 33 oder außen am Kanalkörper 33 und mündet an dessen dem Bearbeitungskopf 11 zugewandten Endbereich aus dem Kanalkörper aus. Von dort aus verläuft das Kabel 42 frei bis zum Antriebsmotor 100.

An der Handgriffpartie 34 ist ein Gehäuse 43 vorgesehen, in welchem die Bestromungseinrichtung 40 angeordnet ist. Die Bestromungseinrichtung 40 hat neben den leistungselektronischen Komponenten zweckmäßigerweise auch mechanische Komponenten, zum Beispiel Kühlmittel. Mithin weist also die Bestromungseinrichtung 40 ein gewisses Gewicht auf, das jedoch beim Betrieb der Handwerkzeugmaschine 10 nicht stört. Die Bestromungseinrichtung 40 ist nämlich unmittelbar an der Handgriffpartie 34 angeordnet, wo der Bediener das Handgriffelement 12 regelmäßig zumindest mit einer Hand ergreift. Somit wirkt in Bezug auf die elektrische Antriebstechnik nur der Antriebsmotor 100 im Sinne eines Hebels auf die Handgriffpartie 34, während sozusagen die Aufbereitung des Stroms für den Antriebsmotor 100 mit günstiger Schwerpunktlage direkt im Handgriffbereich des Handgriffelements 12 liegt.

Die Anordnung der vergleichsweise schmutzempfindlichen oder staubempfindlichen Elektronik in der Handgriffpartie 34 hat auch den Vorteil, dass sie möglichst weit weg von einem Bereich der Hand-Werkzeugmaschine 10 ist, wo Staub anfällt, nämlich am Bearbeitungskopf 11. Somit ist beispielsweise durch Einlässe 44 des Gehäuses 43 einströmende Luft, die vorzugsweise noch durch Kühlmittel, zum Beispiel einen Ventilator 45, in besonderem Maße gefördert wird, aufgrund der großen Entfernung zum Bearbeitungswerkzeug 20 wenig mit Staub belastet.

Zu einem günstigen Handling der Hand-Werkzeugmaschine 10 trägt bei, dass der Antriebsmotor 100 und der Absauganschluss 23 aneinander entgegengesetzten

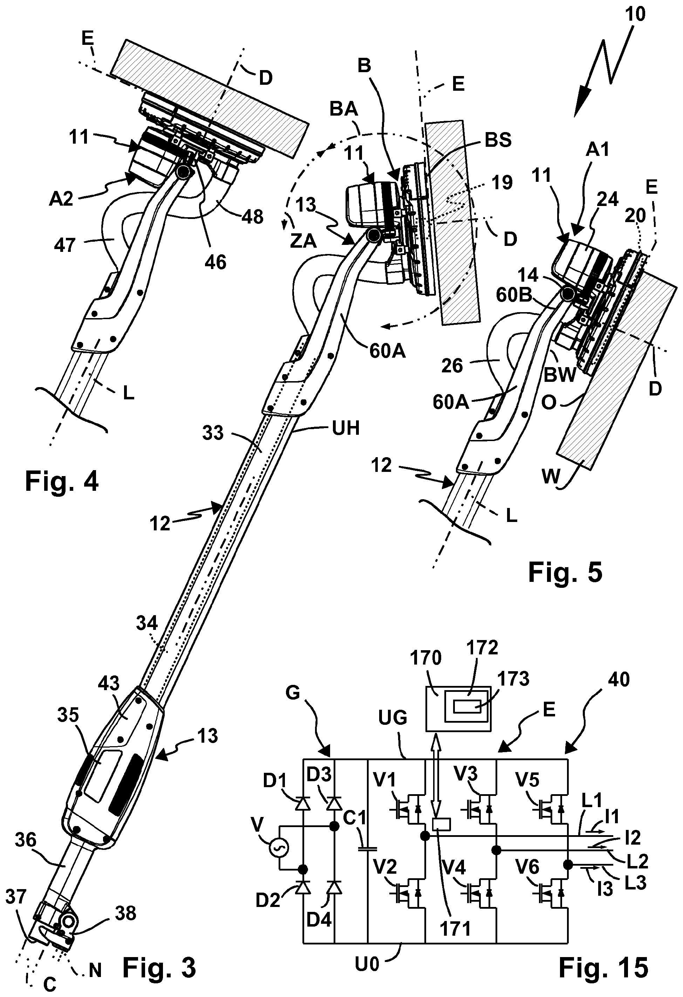

Seiten eines Anlenkbereichs 46 des Bearbeitungskopfes 11 angeordnet sind, wobei die Gelenkanordnung 13 an dem Anlenkbereich 46 mit dem Bearbeitungskopf 11 gelenkig verbunden ist. Der Absaugschlauch 26 hat zwischen dem freien Ende des Handgriffelements 12, wo er mit diesem verbunden ist, und dem Bearbeitungskopf 11 Bogenabschnitte, insbesondere zwei gegensinnig gebogene Bogenabschnitte 47, 48, sodass er die Bewegungen des Bearbeitungskopfes 11 relativ zum Handgriffelement 12 bequem mitmacht. Deutlich wird dies in den Figuren 3, 4 und 5.

Die Werkzeugaufnahme 19 ist an einer Bearbeitungsseite BS des Bearbeitungskopfs 11 angeordnet. In einer Basisposition B des Bearbeitungskopfs 11 relativ zum Handgriffelement 12 sind die Bearbeitungsseite BS und eine Unterseite UH des Handgriffelements 12 dem Werkstück W zugewandt.

Ausgehend von der Basisposition B (Figur 3) kann der Bearbeitungskopf 11 zwischen Auslenkpositionen A1 (Figur 5) und A2 (Figur 4) schwenken. Die Auslenkpositionen A1, A2 sind zweckmäßigerweise Maximalpositionen, wobei ein Schwenken über diese Auslenkpositionen A1, A2 hinaus durchaus möglich ist. Ist der Absaugschlauch 26 über die Auslenkpositionen A1 und A2 hinaus in einem noch größeren Maße auszulenken bzw. zu verformen, bildet er zweckmäßigerweise einen federnden Anschlag für die Auslenkpositionen A1 und A2.

Die Basisposition B bildet zusammen mit den Auslenkpositionen A1 und A2 und gegebenenfalls weiteren Auslenkpositionen über diese Auslenkpositionen hinaus oder Zwischen-Auslenkpositionen zwischen den Auslenkpositionen A1 und A2 einen Bestandteil eines Basis-Arbeitsbereichs BA der Hand-Werkzeugmaschine 10. Es ist ein Schwenken über die Auslenkposition A2 hinaus, dass die Bearbeitungsseite BS und eine Oberseite des Handgriffelements 12 einem Werkstück W zugewandt sind, durchaus möglich. Dann befindet sich der Bearbeitungskopf 12 beispielsweise in einem Zusatz-Arbeitsbereich ZA.

In der Auslenkpositionen A1 verläuft beispielsweise eine Bearbeitungsebene E des Bearbeitungswerkzeugs 20 etwa parallel zur Längsachse L, während in der Auslenkposition A2 die Bearbeitungsebene E etwa rechtwinkelig zur Längsachse L ist.

An dem den Bearbeitungskopf 11 haltenden Endbereich des Handgriffelements 12, vorliegend also dem Kanalkörper 33, ist eine Gabel 50 angeordnet, zwischen deren Gabelarmen 51, 52 der Bearbeitungskopf 11 um die Schwenkachse S1 schwenkbar gelagert ist. Die Gabelarme 51, 52 sind an einem Halteabschnitt 53 in der Art von Halbschalen ausgestaltet, zwischen denen eine Halterung 54 oder eine Aufnahme für das Handgriffelement 12, insbesondere deren Kanalkörper 33, gebildet ist.

Die Halterung 54 ist beispielsweise zwischen Wänden 55 der Gabelarme 51, 52 ausgebildet, beispielsweise als runde Aufnahmekontur. Als Verdrehsicherung und/oder Verschiebesicherung bezüglich der Längsachse L des Handgriffelements 12 dienen Stützstrukturen 58 der Gabel 50, die insbesondere durch die Schraubdome 57 gebildet sein können. In die Stützstrukturen 58, beispielsweise Formschlussvorsprünge, greifen Stützstrukturen 33A des Handgriffelements 12 ein, beispielsweise am Außenumfang des Kanalkörpers 33 vorgesehen Vertiefungen, insbesondere Nuten oder Längsvertiefungen. Die Stützstrukturen 58, 33A wirken als Verdrehsicherung und/oder Verschiebesicherung bezüglich der Längsachse L des Handgriffelements 12.

Als Zugentlastung für das Kabel 42 ist es vorteilhaft, wenn eine Kabelklemme 49 an der Gabel 50 vorgesehen ist. Die Kabelklemme 49 weist beispielsweise an jedem der Gabelarme 51, 52 vorgesehene Klemmkörper auf, die beim Zusammenfügen der Gabelarme 51, 52 zur Fixierung des Halteelements 12 gleichzeitig das Kabel 42 klemmen.

Die Gabelarme 51, 52 sind insbesondere an ihren vor den Halteabschnitt 53 vorstehenden Armabschnitten 60A, 60B verstärkt, beispielsweise durch eine Rippenstruktur 59.

Die Gabelarme 51, 52 weisen zwischen dem Halteabschnitt 53 und ihren freien Enden 61 Abwinkelungen 62, 63 zwischen den Armabschnitte 60A, 60B auf. Die Abwinkelungen 62, 63 dienen bevorzugt dazu, den Zwischenraum zwischen den Gabelarmen 51, 52 und den Bewegungsraum unterhalb der Gabelarme 51, 52 für den Bearbeitungskopf 11 optimal auszugestalten.

Die Abwinkelungen 62 verlaufen einander entgegengesetzt im Sinne einer Aufweitung oder Verbreiterung eines Abstandes zwischen den Enden 61. Dadurch ist insbesondere im Bereich des Absaugschlauchs 26 und des Absauganschlusses 23 ein vergrößerter Bewegungsraum zwischen den Gabelarmen 51, 52 vorhanden.

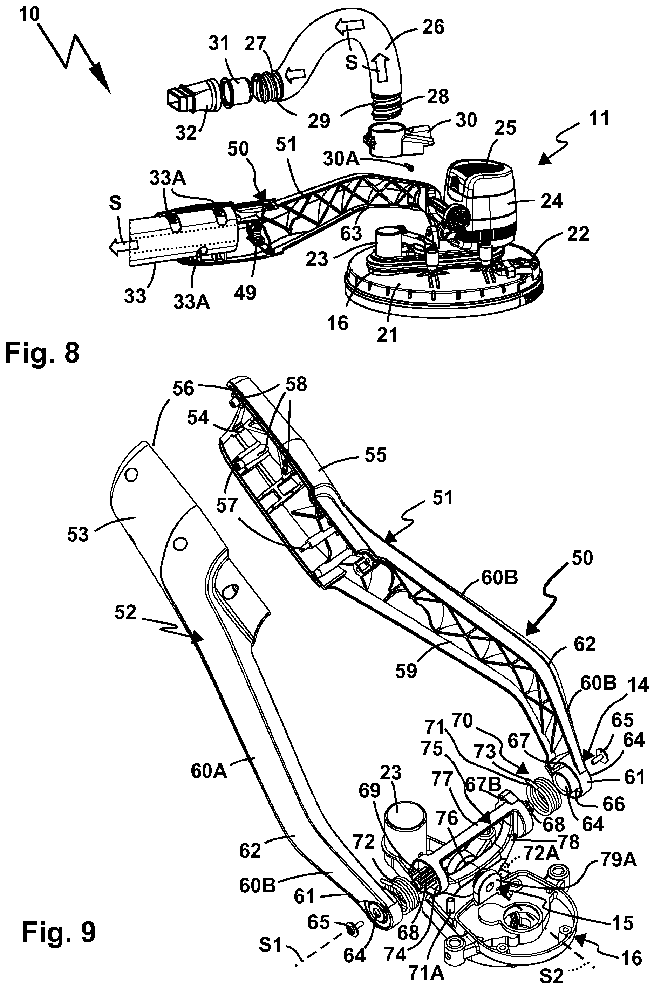

Die Abwinkelungen 63 verlaufen gleichsinnig nebeneinander, jedoch ausgehend vom Handgriffelement 12 und bezüglich der Längsachse L in einem Sinne von dem Bearbeitungskopf 11 weg und zu den freien Enden 61 wieder zum Bearbeitungskopf 11 oder der Längsachse L hin, so dass insbesondere für die Auslenkposition A1, etwa entsprechend Figur 8, oder eine weitere Auslenkung über die Auslenkposition A1 hinaus ein Raum BW unterhalb der Gabelarme 51, 52 für einen oberen Abschnitt des Bearbeitungskopfs 11 vorhanden ist.

An den freien Enden 61 sind als Lageraufnahmen ausgestaltete Lagerelemente 64 für Lagerwellenteile 65 des Schwenklagers 14 vorgesehen. Die Lagerwellenteile 65, die z.B. in der Art von Lagerbolzen ausgestaltet sind, sind beispielsweise Schrauben oder dergleichen andere Bolzen, die die Lageraufnahmen der Lagerelemente 64 durchdringen und in als Lagervorsprünge ausgestaltete Lagerelemente 68 eindringen.

Die Lagerelemente 68 sind an einem Lagerkörper 75 vorgesehen und stehen vor eine Traverse 77 des Lagerkörpers 75 vor. Der Lagerkörper 75 ist beispielsweise als eine Art Lagerwelle oder Lagervorsprung ausgestaltet. Beispielsweise sind die Lagerelemente 68 an den jeweiligen Längsendbereichen der Traverse 77 vorgesehen. Zwischen der Traverse 77 und dem Tragkörper 16 erstreckt sich ein Stützlagerabschnitt 78, der beispielsweise bogenförmig ist.

Der Stützlagerabschnitt 78 bildet einen Bestandteil des Schwenklagers 15 zum Schwenken um die Schwenkachse S2. Der Stützlagerabschnitt 78 ist von einer Lagerwelle 76 durchdrungen, die ihrerseits wiederum in Lageraufnahmen 79 von Lagerböcken 79A aufgenommen ist, die vor den Tragkörper 16 vorstehen. Der Stützlagerabschnitt 78 ist zwischen den Lagerböcken 79A angeordnet. Selbstverständlich könnten anstelle der Lagerwelle 76 auch Lagerbolzen vorgesehen sein, die beispielsweise die Lageraufnahmen 79 durchdringend im Lagerkörper 75 insbesondere drehbar aufgenommen sind. Somit ist also die Schwenkachse S2 näher beim Tragkörper 16 als die Schwenkachse S1, so dass der Bearbeitungskopf 11 um die entsprechend nahe bei der Bearbeitungsebene E befindliche Schwenkachse S2 schwenken kann. Der Bearbeitungskopf kann dem Verlauf der Werkstückoberfläche O bequem folgen.

In Bezug auf die Schwenkachse S2 pendelt oder schwenkt der Bearbeitungskopf 11 frei, wobei der Absaugschlauch 26 und die Leitungsanordnung 41 die Schwenkbewegung dämpfen oder bremsen. Dabei ist allerdings zu berücksichtigen, dass der Absauganschluss 23 nahe bei der Schwenkachse S2 ist bzw. von der Schwenkachse S2 durchdrungen ist, was die Schwenkbarkeit des Bearbeitungskopfes 11 um die Schwenkachse S2 entsprechend wenig einschränkt.

In Bezug auf die Schwenkachse S1 hingegen ist eine Positionierfederanordnung 70 vorgesehen, die in dem Bearbeitungskopf 11 in die Basisposition B beaufschlagt. Die Positionierfederanordnung 70 umfasst an den Lagerelementen 64, 68 direkt abgestützte Positionierfedern 71, 72. Die Positionierfeder 71 ist dem Gabelarm 51 zugeordnet, während die Positionierfeder 72 dem Gabelarm 52 zugeordnet ist. Die Positionierfedern 71, 72 beaufschlagen den Bearbeitungskopf 11 gegensinnig, d.h. die eine Positionierfeder 71 beaufschlagt den Bearbeitungskopf 11 beispielsweise bezüglich der Schwenkachse S1 im Uhrzeigersinn, während die andere Positionierfeder 72 den Bearbeitungskopf 11 im Gegenuhrzeigersinn beaufschlagt. Somit wird der Bearbeitungskopf 11 in Bezug auf die Schwenkachse S1 sozusagen in einer Mittellage, nämlich der Basisposition B gehalten.

Die Positionierfedern 71, 72 sind mit Stützarmen 73 an Stützaufnahmen 67 der Lagerelemente 64 und Stützaufnahmen 67B bei den Lagerelementen 68 abgestützt. Die Positionierfedern 71, 72 sind beispielsweise Schenkelfedern, deren Längsenden als Stützarme 73 ausgebildet sind.

Die Lagerelemente 68 durchdringen die Positionierfedern 71, 72. Am Außenumfang der Lagerelemente 68 sind zweckmäßigerweise Stützkonturen 69, zum Beispiel Rippen, vorgesehen, an denen sich die Positionierfedern 71, 72 mit ihrem Innenumfang abstützen können. Die Rippen oder Stützkonturen 69 verlaufen zweckmäßigerweise parallel zur Schwenkachse S1. Dadurch ist die Beweglichkeit der Positionierfedern 71, 72 und der Lagerelemente 68 relativ zueinander besonders gut.

Die Positionierfedern 71, 72 sind zweckmäßigerweise geschützt und eingehaust. Sie sind vorteilhaft in Lagergehäusen 66, 74 aufgenommen, die von den Lagerelementen 64, 68 bereitgestellt werden. Beispielsweise sind die Lagergehäuse 66, 74 zueinander komplementär oder passen in der Art von Hülsen oder Steckelementen ineinander, um die Positionierfedern 71, 72 insgesamt einzuhausen. Dadurch verschmutzen die Lagerkomponenten und insbesondere auch die Positionierfedern 71, 72 nicht. Zudem ist die Verletzungsgefahr durch eventuell vorstehende Elemente, zum Beispiel die Stützarme 73, gering.

Die Stützaufnahmen 67 sind beispielsweise an den Lagergehäusen 66 der Lagerelemente 64 vorgesehen. Die Stützaufnahmen 67B sind an den Lagergehäusen 74 bei den Lagerelementen 68 vorgesehen.

Es versteht sich, dass auch in Bezug auf die Schwenkachse S2 eine Positionierfederanordnung vorgesehen sein kann, die den Bearbeitungskopf 11 zum Handgriffelement 12 in Bezug auf die Schwenkachse S2 ausrichtet. Möglich wären beispielsweise Schenkelfedern, die von der Lagerwelle 76 durchsetzt sind und sich einerseits an Lagerböcken 79A und andererseits an beispielsweise dem Stützlagerabschnitt 78 abstützen. Schematisch sind weiterhin elastische Positionierfedern 71A, 72A in Gestalt von beispielsweise Gummipuffern dargestellt, die sich außerhalb des Lagers 15 an festen Strukturen einerseits der Gelenkanordnung 13, beispielsweise dem Stützlagerabschnitt 78, andererseits des Bearbeitungskopfs 11, beispielsweise dem Tragkörper 16 abstützen und somit eine Positionierung des Bearbeitungskopfs 11 zum Handgriffelement 12 bezüglich der Schwenkachse S2 bewirken.

Der Antriebsmotor 100 ist bezüglich des Anlenkbereichs 46 oder bezüglich der Drehachse D der Werkzeugaufnahme 19 exzentrisch angeordnet. Zur Kraftübertragung zwischen einem Abtrieb 81 des Antriebsmotors 100 ist das Getriebe 80 vorgesehen. Das Getriebe 80 umfasst beispielsweise eine Anordnung von mehreren Zahnrädern, die eine Drehzahländerung, insbesondere eine Drehzahlreduzierung, und/oder eine Kraftumlenkung vom Abtrieb 81 zur Werkzeugaufnahme 19 bewirken. Vorliegend ist ein rein rotatorisches Übertragungskonzept vorgesehen, das heißt die Werkzeugaufnahme 19 dreht ausschließlich um die Drehachse D. Möglich wäre aber auch eine beispielsweise exzentrische Bewegung exzentrisch zur Drehachse D, was jedoch in der Zeichnung nicht dargestellt ist und eine andere Ausführungsform darstellen würde. Ferner wäre auch eine Rotationsbewegung der Werkzeugaufnahme 19 mit überlagerter exzentrischer Bewegung ohne weiteres möglich, beispielsweise wenn ein geeignetes Übertragungsgetriebe anstelle oder in Ergänzung des Getriebes 80 vorhanden wäre. Schließlich ist ein so genannter hyperzykloider Bewegungsmodus der Werkzeugaufnahme 19 ebenfalls durch ein entsprechendes Getriebe möglich.

Der Abtrieb 81 kämmt mit einem Zahnrad 82, welches eine Welle 84 antreibt, mit der das Zahnrad 82 drehfest verbunden ist. Weiterhin ist mit der Welle 84 ein Zahnrad 83 drehfest verbunden, welches seinerseits mit einem Abtriebsrad 85 kämmt. Das Abtriebsrad 85 ist drehfest an einer Welle 86 angeordnet, an deren freiem Endbereich die Werkzeugaufnahme 19 drehfest angeordnet ist.

Die Anordnung der Zahnräder 82, 83, 85 bewirkt eine Drehzahlreduzierung und zudem auch eine Kraftumlenkung, da die Drehachse des Abtriebs 81 und der Welle 86 nicht koaxial sind.

Die Welle 84 ist mit Lagern 87 drehbar einerseits bezüglich des Trägerkörpers 16 und andererseits bezüglich eines mit dem Trägerkörper 16 verbundenen Getriebegehäuses 90 gelagert. Der Trägerkörper 16 bildet einen Deckel für das Getriebegehäuse 90. Beispielsweise sind am Trägerkörper 16 und dem Getriebegehäuse 90 Lageraufnahmen 91 für die insbesondere als Wälzlager, bevorzugt Kugellager, ausgeführten Lager 87 vorgesehen.

Die Welle 86 ist über ein weiteres Lager 87 bezüglich des Trägerkörpers 16 und ein Lager 88, das in einer Lageraufnahme 92 des Lagergehäuses 90 aufgenommen ist, bezüglich des Lagergehäuses 90 drehbar gelagert. Somit sind die jeweiligen Längsendbereiche der Wellen 86, 84 mit Drehlagern an einem Schutzgehäuse gelagert.

Das Getriebegehäuse 90 weist eine Platte 96 auf, an der die Lageraufnahmen 91, 92 vorgesehen sind. Die Lageraufnahme 92 ist an ihrer der Werkzeugaufnahme 19 zugewandten Unterseite mit einem die Lageraufnahme 92 umgebenden Dichtrand 93 versehen, so dass das Getriebegehäuse 90 das Getriebe 80 von unten her dicht kapselt. Das Lager 88 liegt am Dichtrand 93 mit beispielsweise einer zusätzlichen Dichtung staubdicht an.

Die oberseitige Kapselung des Getriebes 80 ist zweckmäßigerweise durch den Tragkörper 16 realisiert. Der Tragkörper 16 weist beispielsweise in der Zeichnung nicht sichtbare Steckaufnahmen auf, in welche Steckvorsprünge oder Schraubdome 95 des Getriebegehäuses 90 von unten her eingreifen. Ein Randbereich 97 des Getriebegehäuses 90 ist beispielsweise mit einer Dichtung versehen, sodass er an einem Dichtbereich 98, beispielsweise einer Dichtkante, des Tragkörpers 16 dicht anliegt.

Der Tragkörper 16 trägt also zur Kapselung des Getriebes 80 bei. Nach oben hin dichtet er das Getriebegehäuse 80 nahezu vollständig ab, abgesehen von einer Motoraufnahme 89, in welcher der Antriebsmotor 100 aufgenommen ist. Der Tragkörper 16 bildet beispielsweise ein Gehäuseteil des Getriebegehäuses 80, insbesondere eine Gehäuseschale.

Vor den Tragkörper 16 stehen Tragvorsprünge 99, beispielsweise Arme, seitlich vor, beispielsweise vier Tragvorsprünge 99, an denen jeweils Bolzenaufnahmen oder Montageaufnahmen 94 zur Aufnahme von Montageelementen 94B zur Verbindung mit der Abdeckung 21 vorstehen.

An dem Getriebegehäuse 90 ist ferner der Absauganschluss 23 vorgesehen. Der Absauganschluss 23 steht vor den Tragkörper 16 seitlich vor.

Der Antriebsmotor 100 ist ähnlich wie das Getriebe 80 optimal gegen Staub geschützt, was nachfolgend deutlich wird. Der Antriebsmotor 100 weist beispielsweise einen Rotor 101 auf, der in einem Stator 110 aufgenommen ist. Der Antriebsmotor 100 ist ein bürstenloser, elektronisch kommutierter Motor, der durch die Bestromungseinrichtung 40 bestrombar ist.

Der Rotor 101 umfasst eine Motorwelle 102, an der ein Blechpaket 103 angeordnet ist. Vor das Blechpaket 103 vorstehende Längsenden der Motorwelle 102 sind mit einem Motorlager 104 und einem Abtriebslager 105, beispielsweise Wälzlagern und/oder Gleitlagern, bezüglich des Stators 110 drehbar gelagert.

An einem freien Endbereich der Motorwelle 102, z.B. beim Motorlager 104, ist eine Lüfterhalterung 108 zum Halten eines Lüfterrads 109 vorgesehen.

Ein Lüfterrad 109 und die Werkzeugaufnahme 19 sind an einander entgegengesetzten Seiten des Antriebsmotors 100 angeordnet.

Das Lüfterrad 109 realisiert eine Drucklüftung, d.h. Luft wird durch die Einströmöffnung 25 durch das Lüfterrad 109 sozusagen angesaugt, durchströmt den Stator 110 und tritt an der zum Lüfterrad 109 entgegengesetzten Seite des Stators 110, im Bereich des Abtriebslagers 105, aus dem Stator 110 aus und strömt weiter zum Luftauslassbereich 18.

Der Stator 110 umfasst einen Statorkörper 111, der an einem Lagerdeckel 125A eine Lageraufnahme 112 aufweist, in welcher das Motorlager 104 aufgenommen ist. Die Motorwelle 102 durchdringt beispielsweise eine Durchtrittsöffnung 113 des Stators 110 und ist mit einem Endbereich an dem Motorlager 104 gehalten. Der Lagerdeckel 125A ist beispielsweise mit dem Statorkörpers 111 einstückig, könnte aber auch als vom Statorkörper 111 lösbar verbundenes Bauteil ausgestaltet sein, so wie der später noch erläuterte Lagerdeckel 125.

Neben der Durchtrittsöffnung 113 ist ein Vorsprung 114 vorgesehen, der in eine Nut 106 am Rotor 101, beispielsweise am Blechpaket 103, eingreift. Dadurch ist eine gewisse Labyrinthstruktur geschaffen, die zur Dichtigkeit des Antriebsmotors 100 beiträgt. Das Blechpaket 103 ist in einer Rotoraufnahme 115 des Statorkörpers 111 aufgenommen.

Der Statorkörper 111 besteht beispielsweise aus einem Kunststoffmaterial. An Trägern 116 des Statorkörpers 111 sind Spulen 121 einer Erregerspulenanordnung 120 angeordnet. Radial außen an den Trägern 116 erstreckt sich eine Umfangswand 117, beispielsweise aus Kunststoffmaterial, des Stators 110.

Eine Basis der Träger 116 wird beispielsweise vom Material eines Blechpakets 111B gebildet, das mit dem Kunststoffmaterial zur Ausbildung des Statorkörpers 111 umspritzt ist.

Die Erregerspulenanordnung 120 weist Anschlüsse 122, 123 sowie 124 auf, die mit den Leitern L1, L2, L3 elektrisch verbunden sind. Die Anschlüsse 122-124 sind Phasen P1, P2 und P3 der Erregerspulenanordnung 120 zugeordnet. Die Anschlüsse 122-124 sind beispielsweise an einer Stirnseite des Statorkörpers 111, insbesondere der Umfangswand 117, angeordnet.

Die Rotoraufnahme 115 ist durch einen Lagerdeckel 125 verschlossen, der in das Motorgehäuse 24 eingebunden werden kann. Der Lagerdeckel 125 weist beispielsweise eine Bodenwand 133 auf, von der ein Verschlussvorsprung 126 zum Verschließen der Rotoraufnahme 115 vorsteht. Der Verschlussvorsprung 126 weist einen Vorsprung 127 auf, der in eine Nut 107 des Rotors 101, nämlich am Blechpaket 103, eingreift. Dadurch ist eine labyrinthartige Abdichtung oder sind Labyrinthdichtungen 118 realisiert. Die Vorsprünge 114, 127 sind beispielsweise Ringvorsprünge, während die Nuten 106, 107 Ringnuten sind. Die Nuten 106, 107 sind beispielsweise an einander entgegengesetzten Stirnseiten des Blechpakets 103 vorgesehen.

Die Bodenwand 133 und der Verschlussvorsprung 126 dichten den Antriebsmotor 100 an seiner Stirnseite beim Motorlager 105 ab. Auch eine Wand 17 des Getriebegehäuses 80, die beispielsweise ein Bestandteil des Tragkörpers 16 sein kann, bildet eine den Antriebsmotor 100 stirnseitig verschließende Wand.

Im Bereich des Verschlussvorsprungs 126 ist weiterhin eine Aufnahme 128 für ein Lageraufnahmeelement 130 angeordnet. Das Lageraufnahmeelement 130 weist eine Lageraufnahme 131 für das Abtriebslager 105 auf. Das Lageraufnahmeelement 130 ist beispielsweise in ein Gewinde 129 der Aufnahme 128 eingeschraubt oder mit entsprechenden Rastkonturen in der Aufnahme 128 verrastet. In dem Lageraufnahmeelement 130 ist weiterhin eine Dichtscheibe 132 oder ein sonstiges abdichtendes Element gehalten. Die Dichtscheibe 132 hält das Abtriebslager 105 in der Lageraufnahme 131.

Zwischen den Trägern 116 des Statorkörpers 111 und somit zwischen den Spulen 121 sind Kühlkanäle 119 vorgesehen, durch die die Kühlluft K den Stator 110 und somit die Erregerspulenanordnung 120 durchströmen kann. Die Kühlluft K strömt an einer von der Werkzeugaufnahme 19 abgewandten Seite des Antriebsmotors 100 in die Kühlkanäle 119 ein und an der der Werkzeugaufnahme 19 zugewandten Seite des Antriebsmotors 100 aus den Kühlkanälen 119 aus. Dort wird sie durch eine Bodenwand 133 des Lagerdeckels 125 nach radial außen abgelenkt und strömt durch einen Strömungsraum 134 zu einer Umfangswand 135 des Deckels 130, an der der Luftauslassbereich 18 vorgesehen ist. Beispielsweise sind an der Umfangswand 135 Rippen 136 vorgesehen, zwischen denen Abstände oder Ausströmöffnungen 137 vorhanden sind, durch die die Kühlluft K aus dem Motorgehäuse 24 ausströmen kann. Der Strömungsraum 134 ist zwischen der Umfangswand 135 und der Umfangswand 117 vorgesehen. Zwischen der Umfangswand 117 und der Umfangswand 135 erstrecken sich vorteilhaft Stützrippen oder Stützwände 138. An den Stützwänden 138 sind vorteilhaft Leiteraufnahmen 139 zur Aufnahme oder zum Halten der Leitungen L1, L2 und L3 vorgesehen.

Das Kabel 42 ist über einen Einlass 140 an der Umfangswand 135 in den Strömungsraum 134 eingeführt. Aus dem Kabel 42 sind die einzelnen Leitungen L1, L2 und L3 herausgeführt und an den Stützwänden 138, nämlich den Leiteraufnahmen 139, gehalten und mit den Anschlüssen 122-124 der Erregerspulenanordnung 120 verbunden.

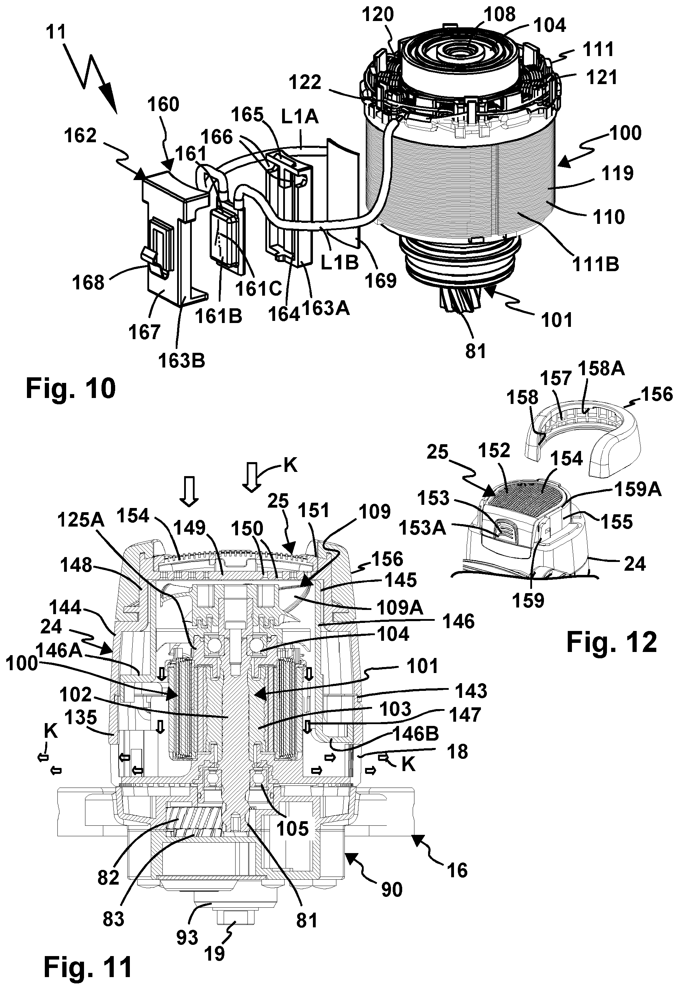

In Figur 11 wird deutlich, dass die Bodenwand 133 oberhalb des Trägerkörpers 16 verläuft und die Umfangswand 135 sozusagen vor den Trägerkörper 16 vorsteht. Die Umfangswand 135 ist an ihrer oberen Stirnseite 141 mit einer Dichtkontur 142 versehen, die mit einer korrespondierenden Dichtkontur 143 einer Umfangswand 144 des Motorgehäuses 24 in Eingriff gelangt. Somit ist eine im Wesentlichen staubdichte Verbindung zwischen dem Motorgehäuse 24 und dem Lagerdeckel 125 gegeben.

In dem Motorgehäuse 24 ist ein Strömungsgehäuse oder Luftführungskörper 145 aufgenommen, der sich um den Antriebsmotor 100 erstreckt. Beispielsweise hat der Luftführungskörper 145 eine Wand 146, die einen Luftführungsbereich 147 um den Antriebsmotor 100 begrenzt. Die Wand 146 ist beispielsweise als eine Art Luftführungshülse und/oder Umfangswand und/oder als Strömungsgehäuse ausgestaltet. Durch den Luftführungsbereich 147, der auch Kanäle aufweisen kann, strömt jedenfalls die Kühlluft K am Außenumfang des Stators 110 entlang und kühlt diesen. Die Wand 146 ist beispielsweise im Bereich des Lüfterrads 109 zylindrisch und steht bis zum Lüfterrad 109 vor.

Die Wand 146 trägt also dazu bei, dass Lüfterschaufeln 109A des Lüfterrads 109 die Kühlluft K besonders effektiv zum Antriebsmotor 100 bzw. dem Stator 110 und dem Rotor 101 sozusagen drückt.

Der Luftführungskörper 145 hat an seinem von dem Lüfterrad 109 entfernten Längsendbereich (bezüglich einer Längsachse der Motorwelle 102) sich radial bezüglich der Motorwelle 102 von der Wand 146 nach außen erstreckende Stirnwandabschnitte 146A und 146B, die oberhalb des Luftauslassbereiches 18 verlaufen und so die Kühlluft K nach radial außen aus dem Motorgehäuse 24 lenken.

Bevorzugt ist vorgesehen, dass der Antriebsmotor 100 elektromagnetisch abgeschirmt ist. Beispielsweise kann der Luftführungskörper 145 als ein elektromagnetisch abschirmendes Gehäuse ausgestaltet sein. Dazu besteht der Luftführungskörper 145 beispielsweise aus Metall oder hat eine metallische Komponente. Aber auch das Motorgehäuse 24 kann in einer vorteilhaften Ausgestaltung der Erfindung elektromagnetisch abschirmend sein, beispielsweise mit einer elektrisch leitenden Schutzfolie oder Schutzschicht versehen sein.

Vorteilhaft sind die Leitungen L1-L3 in dem Kabel 42 in einer elektromagnetischen Abschirmung 177, insbesondere einem Geflecht, geführt. Die Abschirmung 177 ist vorzugsweise geerdet. Zur elektromagnetischen Verträglichkeit des Antriebsmotors 100 und der Hand-Werkzeugmaschine zehn insgesamt trägt bei, wenn die Abschirmung 177 mit Antriebsmotor 100 leitend verbunden ist, beispielsweise mit dem Stator 110, insbesondere dem Blechpaket 111B. An dieses kann die Abschirmung 177 beispielsweise anhand einer Feder leitend angelegt sein.

Das Motorgehäuse 24 weist im Bereich des Lufteinlasses oder der Einströmöffnung 25 eine Vorsprungswand 148 sowie eine Deckwand 149 auf. Die Deckwand 149 deckt sozusagen das Motorgehäuse 24 oben ab, wobei jedoch an der Deckwand 149 Luftdurchlässe oder Lufteinlässe 150 für die Kühlluft K vorhanden sind.

Im Bereich der Deckwand 149 ist eine Aufnahme 151 für ein Filterelement 152 vorgesehen, das in die Aufnahme 151 eingesetzt ist. Beispielsweise wird die Aufnahme 151 vom Innenumfang der Vorsprungswand 148 begrenzt. Das Filterelement 152 weist beispielsweise ein Filtergewebe 154 oder eine sonstige engmaschige Filterstruktur auf, die oberhalb der Lufteinlässe 150 angeordnet ist. Somit werden Verschmutzungen, beispielweise Stäube oder dergleichen, die in der Kühlluft K enthalten sind, durch das Filterelement 152 gefiltert.

Das Filterelement 152 ist zweckmäßigerweise anhand von Rastmitteln 153, beispielweise umfassend eine federnde Raste oder dergleichen, am Motorgehäuse 24 verrastet. Die Rastmittel 153 bilden Bestandteile einer Halterung 153A.

An einem oberen, freien Endbereich des Motorgehäuses 24 ist eine Aufnahme 155 für einen Schutzkörper 156 vorgesehen. Während das Motorgehäuse 24 aus einem relativ harten Kunststoff besteht, so dass es eine optimale Schutzwirkung für den Antriebsmotor 100 entfalten kann, ist der Schutzkörper 156 vergleichsweise nachgiebig oder elastisch. Der Schutzkörper 156 ist beispielsweise in der Art einer Spange ausgestaltet. Der Schutzkörper 156 federt Stöße, die auf den Bearbeitungskopf 11 einwirken können und somit prinzipiell den Antriebsmotor 100 beschädigen würden, optimal ab.

Bevorzugt ist es, wenn der Schutzkörper 156 biegeflexibel ist. Der Schutzkörper 156 ist zwar an sich hufeisenförmig oder U-förmig, kann jedoch gebogen werden. Somit ist es beispielsweise möglich, an seinen freien Endbereichen angeordnete Halteaufnahmen 158 in Haltevorsprünge 159 des Motorgehäuses 24 sozusagen einzuhängen. Vorteilhaft ist es, wenn der Schutzkörper 156 zu dem noch weitere Haltekonturen hat, zum Beispiel einen Haltevorsprung 158A, der an einer Seitenkante entlang verläuft und in eine entsprechende, beispielsweise U-förmige, Halteaufnahme 159A des Motorgehäuses 24 eingehakt werden kann.

Der Antriebsmotor 100 ist mit einer Schutzschaltung 160 versehen, die vor Ort, nämlich am Bearbeitungskopf 11, den Antriebsmotor 100 vor Überhitzung oder sonstiger Beschädigung schützt.

Die Schutzschaltung 160 weist beispielsweise einen Trennschalter 161 auf. Prinzipiell wäre es möglich, den Trennschalter 161 unmittelbar in das Motorgehäuse oder jedenfalls den Stator 110 des Antriebsmotors 100 zu integrieren. Vorliegend ist jedoch ein montagefreundliches, leicht nachrüstbares oder austauschbares Konzept gewählt, bei dem der Trennschalter 161 außerhalb des Stators 110, jedoch in direktem Kontakt mit diesem angeordnet ist.

Der Trennschalter 161 umfasst einen thermisch betätigbaren Schalter oder ist dadurch gebildet, wobei der thermisch betätigbare Schalter bei einer Erwärmung des Stators 110 über eine vorbestimmte Temperatur hinaus in eine Trennstellung geht, ansonsten jedoch eine Verbindungsstellung einnimmt. In der Verbindungsstellung verbindet der Trennschalter 161 den Leiter L1 mit dem einer Phase der Erregerspulenanordnung 120 zugeordneten Anschluss 122, während er in der Trennstellung den Leiter L1 von Anschluss 122 und somit der Phase P1 der Erregerspulenanordnung 120 trennt.

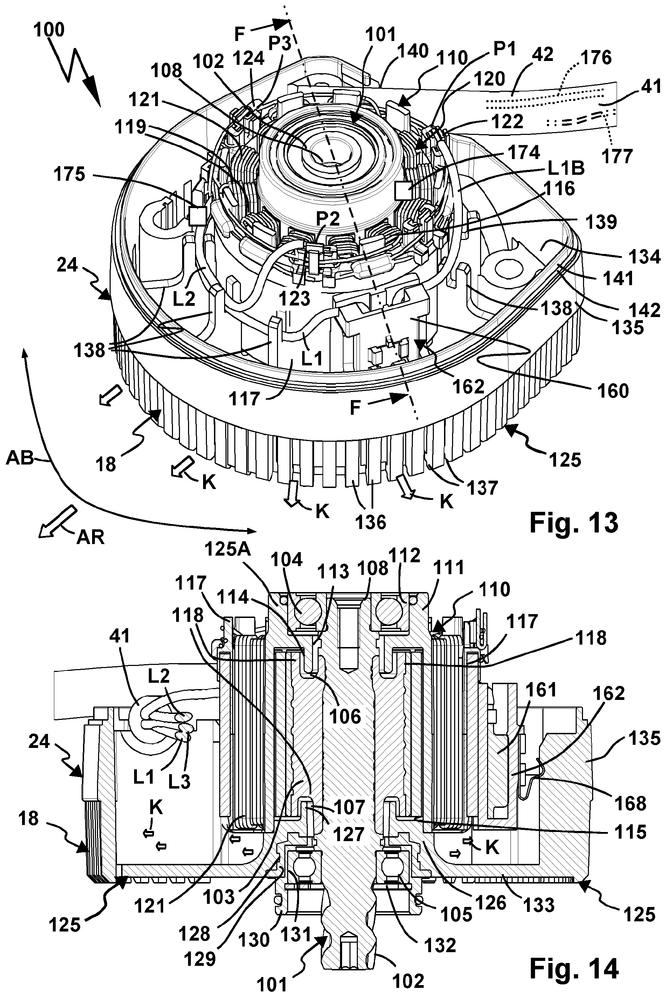

Der Trennschalter 161 ist zweckmäßigerweise in einem Schutzgehäuse 162 angeordnet, welches ein Gehäuseteil 163A und ein Gehäuseteil 163B aufweist. Das Schutzgehäuse 162 haust den Trennschalter 161 zweckmäßigerweise vollständig ein. Es wäre möglich, dass wie in Figur 13 dargestellt das Schutzgehäuse 162 an seiner Oberseite offen ist, sodass Luft zum Trennschalter 161 gelangen kann. Bevorzugt ist jedoch das Schutzgehäuse 163 vollständig geschlossen, sodass der Trennschalter 161 besonders empfindlich und schnell auf Temperaturänderungen, insbesondere zu hohe Temperaturen, reagieren kann.

Das Schutzgehäuse 162 begrenzt beispielsweise eine Aufnahme 164, zum Beispiel eine Kammer, in welcher der Trennschalter 161 angeordnet ist. Die Gehäuseteile 163A, 163B sind beispielsweise miteinander verrastet, wofür Rastkonturen 165 vorhanden sind.

Das Gehäuseteil 163B bildet einen thermischen Isolator, der den Trennschalter 161 vor Wärmeeinfluss von außen auf den Antriebsmotor 100 schützt, so das Trennschalter 161 durch derartigen Wärmeeinfluss nicht fehl-betätigt wird.

Das Gehäuseteil 163A hingegen ist thermisch leitfähig, sodass vom Stator 110 her kommende Wärme den Trennschalter 161 betätigen kann. Eine vorteilhafte Maßnahme stellt es dar, wenn zusätzlich noch ein Wärmeleitelement 169 angeordnet ist, beispielsweise ein sogenanntes Wärmeleit-Pad, welches die Wärme vom Stator 110 in Richtung des Schutzgehäuses 162 und somit zum Trennschalter 161 leitet.

Das Wärmeleitelement 169 hat vorzugsweise eine Geometrie und Flächenausdehnung, die der Geometrie und Flächenausdehnung einer dem Stator 110 zugewandten Stirnseite des Schutzgehäuses 162 entspricht.

Das Wärmeleitelement 169 gleicht zudem Unebenheiten des Schutzgehäuses 162 und/oder des Stators 110 aus, was vorteilhaft die Wärmeübertragung vom Stator 110 zum Trennschalter 161 verbessert.

Eine weitere vorteilhafte Maßnahme sieht vor, dass eine Feder 168, also eine Federanordnung, dazu vorgesehen ist, den Trennschalter 161 in Richtung des Stators 110 zu belasten. Die Feder 168 ist beispielsweise an dem Gehäuseteil 163B angeordnet, insbesondere dessen Frontwand.

Seitlich am Schutzgehäuse 162 sind Leiterdurchlässe 166 für einen Teilabschnitt L1A des Leiters L1 und einen mit dem Anschluss 122 verbundenen Leiterabschnitt L1B vorgesehen.

Der Trennschalter 161 weist vorteilhaft zu dem ein ihn kapselndes Gehäuse 161B auf, in welchem seine elektromechanischen Komponenten, insbesondere ein Bimetall-Streifen 161C, elektrische Kontakte und dergleichen, elektrisch isoliert eingehaust sind. Das Gehäuse 161B ist vorzugsweise staubdicht. Das Gehäuse 161B weist beispielsweise elektrische Kontakte zum Anschließen der Leiterabschnitte L1A und L1B auf. Bei Wärmeeinwirkung oder Kälteeinwirkung bewegt sich der Bimetall-Streifen 161C zwischen den in Figur 10 schematisch eingezeichneten Stellungen hin und her, wobei er eine elektrische Verbindung herstellt oder trennt.

Wenn der Trennschalter 161 in seine Trennstellung geht, fließt kein Strom mehr über die Leitungen L1. Dies kann die Stromüberwachungseinrichtung 171 der Bestromungseinrichtung 40 ermitteln und an die Steuerung 170 melden. Die Steuerung 170 schaltet dann insgesamt die Bestromungseinrichtung 40 ab der Art, dass kein Strom mehr über die Leitungen L1-L3 fließt. Somit erfasst sozusagen die Steuerung 170 dezentral eine Störung am Antriebsmotor 100. Dort ist lediglich der Trennschalter 161 als Sicherheitsmaßnahme erforderlich. Auf diesem Weg werden beispielsweise Datenübertragungsleitungen eingespart, die ansonsten vom Bearbeitungskopf 11 über das Handgriffelement 12 zur Steuerung 140 geführt werden müssten. Die Steuerung 170 arbeitet vorzugsweise sensorlos, d.h. ohne eine vom Antriebsmotor 100 her kommende Drehwinkelinformation eines dort angeordneten Drehwinkelsensors.

Selbstverständlich ist es grundsätzlich möglich, dass beispielsweise ein Drehwinkelsensor 174 am Antriebsmotor 100 angeordnet ist, der die jeweilige Drehwinkelposition oder Drehzahl des Rotors 101 erfasst und über eine Datenleitung 176, die vorzugweise am und/oder im Handgriffelement 12 verläuft (in Figur 13 schematisch angedeutet), an die Steuerung 170 meldet. Auf diese Weise ist auch möglich, dass die Steuerung 170 eine jeweilige Drehwinkelposition des Rotors 101 auswertet und anhand dieser mindestens einen Drehwinkelinformation die Erregerspulenanordnung 120 bestromt.

Es versteht sich, dass auch andere oder weitere Trennschalter beim Antriebsmotor 100 vorteilhaft sein können, so zum Beispiel ein einen Stromfluss auf der Leitung L2 erfassender Stromschalter 175, der bei einem Stromfluss, der über einem vorbestimmten Stromwert liegt, die Leitung L2 von der Phase P2 trennt. Ohne weiteres möglich wäre es, dass der Stromschalter 175 in Reihe mit dem Trennschalter 161 beispielsweise an der Leitung L1 angeordnet ist.

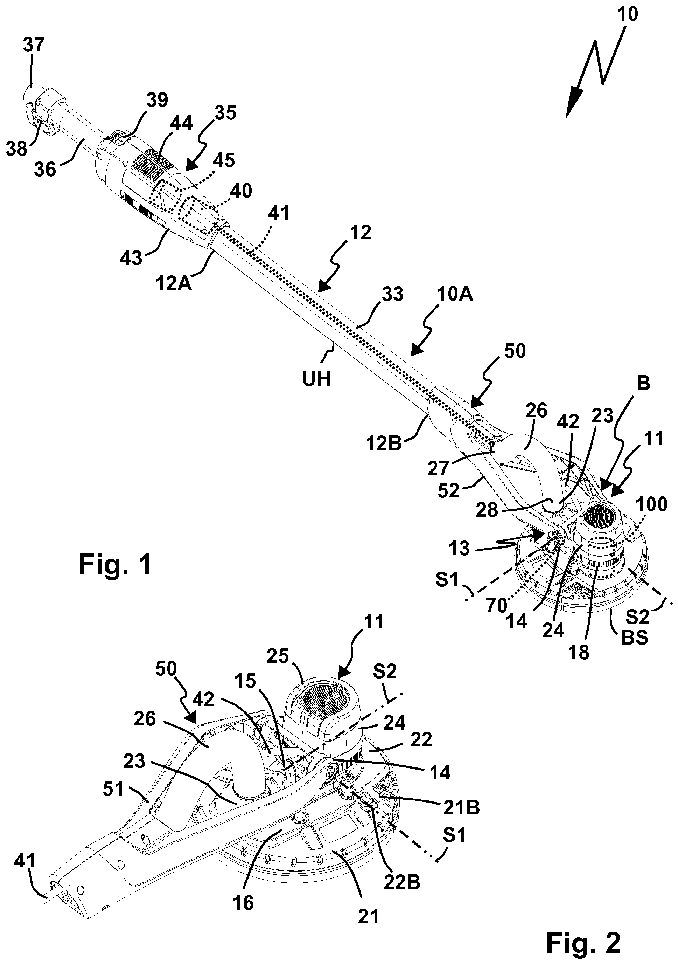

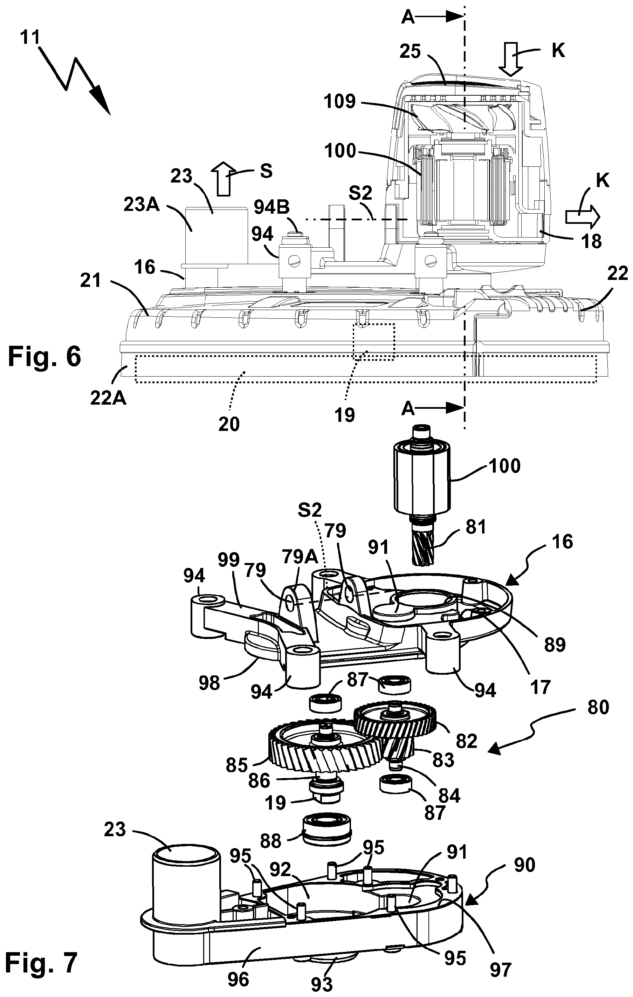

Der Griffstab oder das Handgriffelement 12 ist beim Ausführungsbeispiel gemäß Figuren 1-15 einstückig, das heißt dass beispielsweise sogar die Kanalkörper 33, 36 Bestandteile eines insgesamt durchgehenden Rohrkörpers sein können.

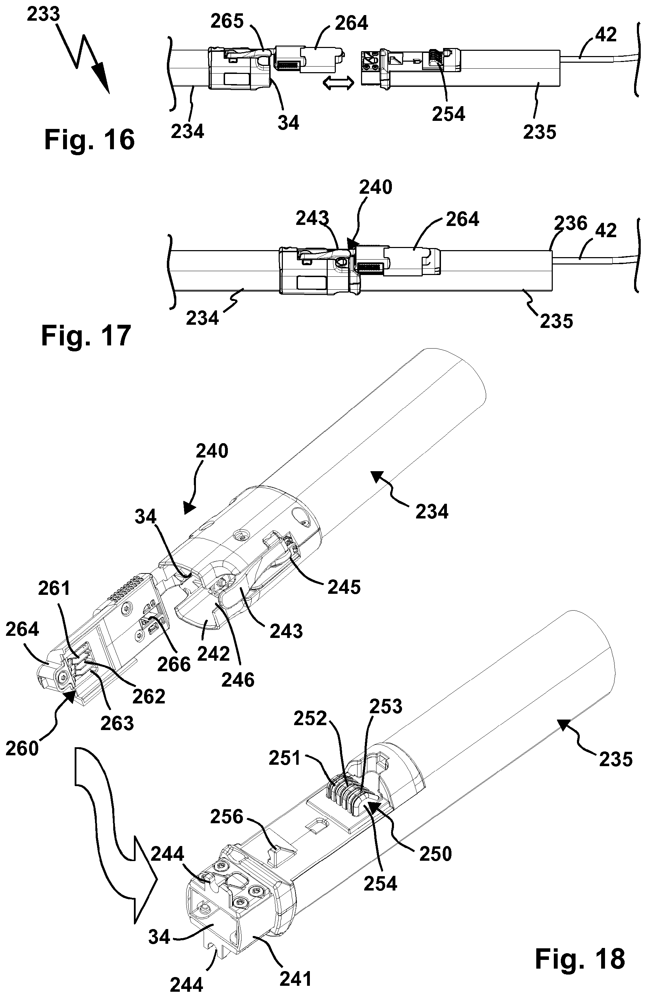

Ohne weiteres ist aber auch ein mehrteiliges Handgriffelement möglich, was anhand der Figuren 16-18 deutlich wird. Beispielsweise kann anstelle des Kanalkörpers 33 ein zweiteiliger Kanalkörper 233 vorgesehen sein. Der Kanalkörper 233 weist beispielsweise Segmente 234, 235 auf. Die Segmente 234, 235 können beispielsweise voneinander gelöst werden (Figur 16).

In den Segmenten 234, 235 verläuft der Strömungskanal 34.

An einem Endbereich 236 des Segments 35 ist beispielsweise das Kabel 42 aus dem Kanalkörper 233 herausgeführt.

Das Kabel 42 umfasst die Leitungen L1-L3, d.h. insgesamt drei stromführende Leitungen, die entlang des Kanalkörpers 233 zur Bestromungseinrichtung 40 führen und an der Trennstelle zwischen den Segmenten 234 und 235 lösbar miteinander verbindbar sind.

Die Segmente 234, 235 sind lösbar miteinander verbindbar, sodass sie von der in Figur 16 dargestellten einander getrennten Stellung in eine in Figur 17 dargestellte miteinander verbundene Stellung gebracht werden können. Zum lösbaren Verbinden der Segmente 234, 235 dient eine Verbindungseinrichtung 240. Die Verbindungseinrichtung 240 umfasst beispielsweise einen am Segment 235 vorgesehenen Verbindungsvorsprung 241, der beispielsweise stumpf mit einem Verbindungsvorsprung 242 am Segment 234 verbindbar ist. Dann ist ein durchgehender Strömungskanal 34 realisiert. Der Strömungskanal 34 verläuft nämlich durch den Steckvorsprung 241 und die Steckaufnahme 242 hindurch.

Alternativ oder ergänzend ist auch eine Steckverbindung möglich, d.h. dass beispielsweise der Verbindungsvorsprung 241 einen Steckvorsprung und der Verbindungsvorsprung 242 eine Steckaufnahme aufweisen, die ineinander einsteckbar sind.

Die Verbindungseinrichtung 240 umfasst ferner Haltemittel in Gestalt von beweglich am Segment 234 gelagerten Haltern 243, die mit Halteaufnahmen oder Haltevorsprüngen 244 am Segment 235 in Eingriff gebracht werden können. Die Halter 243 sind beispielsweise an Lagern 245 schwenkbar gelagert, sodass sie von den Haltevorsprüngen 244 weg und somit außer Eingriff von diesen geschwenkt werden können.

Bevorzugt ist es, wenn die Haltevorsprünge 244 in Aussparungen oder sonstige Halteaufnahmen am Segment 234 eingreifen können. Somit ist ein zusätzlicher Formschluss zwischen den Segmenten 234, 235 realisiert.

Zur elektrischen Verbindung zwischen den Segmenten 234, 235 dienen elektrische Kontaktanordnungen 250, 260, die lösbar miteinander verbindbar sind. Die Kontaktanordnung 250 umfasst beispielsweise Kontakte 251, 252, 253, die den Leitern L1-L3 zugeordnet und mit diesen verbunden sind. Beispielsweise sind die Kontakte 251-253 an einem Kontaktträger 254 angeordnet, insbesondere in Vertiefungen oder anderweitig mechanisch geschützt. Der Kontaktträger 254 ist beispielsweise in der Art eines Vorsprungs oder kammartig ausgestaltet.

Die Kontaktanordnung 260 umfasst korrespondierende Kontakte 261-263, die ebenfalls den Leitungen oder Leitern L1-L3 zugeordnet sind. Die Kontaktanordnung 260 ist an einem Kontaktträger 264 angeordnet, welcher anhand eines Schwenklagers 265 schwenkbar am Segment 234 gelagert ist. Beispielsweise ist der Kontaktträger 264 mit dem Halter 243 des Segments 234 einstückig oder bewegungsgekoppelt. Somit können die Kontakte 261-263 von den Kontakten 251-254 zur elektrischen Trennung weg oder zur elektrischen Verbindung zu diesen hin geschwenkt werden.

Eine Halteaufnahme 266 am Kontaktträger 264 kann zur zusätzlichen Sicherung dieser Verbindung zwischen den Segmenten 234, 235 bzw. den Kontakten 261-263 mit den Kontakten 251-254 in Eingriff mit einem Haltevorsprung 256 am Segment 235 gebracht werden.

Die Verbindung zwischen den Segmenten 234 und 235 kann durch zusätzliche Rastmittel, Schraubmittel oder dergleichen gesichert werden.

Man erkennt in diesem Zusammenhang den Vorteil des Sicherungskonzepts mit der Schutzschaltung 160 und dem Trennschalter 161, weil nämlich die Kontaktanordnungen 250 und 260 nur insgesamt 3 Kontaktpaare, nämlich für die Leitungen L1, L2 und L3, benötigen.

Gemäß einem nicht nur bei dem konkreten Ausführungsbeispiel vorteilhaften Konzept ist vorgesehen, dass eine Einströmöffnung für einen Kühlluftstrom und eine eine Werkzeugaufnahme (vorliegend 19) aufweisende Bearbeitungsseite BS an einander entgegengesetzten Seiten, insbesondere Stirnseiten, eines Motorgehäuses (hier 25) oder eines Maschinengehäuses angeordnet sind.

Eine Ausströmrichtung für den Kühlluftstrom K verläuft zweckmäßigerweise quer zur Bearbeitungsebene E.

## Patentansprüche

1. Hand-Werkzeugmaschine, insbesondere Schleifmaschine, mit einem Handgriffelement (12) zum Ergreifen durch einen Bediener und einem Bearbeitungskopf (11), der einen elektrischen Antriebsmotor (100) zum Antreiben einer zum Halten eines Bearbeitungswerkzeugs (20) vorgesehenen Werkzeugaufnahme (19) aufweist, wobei die Hand-Werkzeugmaschine eine Bestromungseinrichtung (40) zur Bestromung des Antriebsmotors (100) über eine Leitungsanordnung (41) aufweist, über die der Antriebsmotor (100) und die Bestromungseinrichtung (40) miteinander verbunden sind, wobei an dem Antriebsmotor (100) eine Schutzschaltung mit mindestens einem elektrischen Trennschalter (161, 175) zum Trennen einer Verbindung zwischen mindestens einer elektrischen Leitung (L1) der Leitungsanordnung (41) und einer über diese Leitung (L1) mit Strom versorgbaren Phase (P1, P2, P3) einer Erregerspulenanordnung (120) des Antriebsmotors (100) angeordnet ist, **dadurch gekennzeichnet, dass** die Bestromungseinrichtung (40) eine Stromüberwachungseinrichtung (171) zum Erkennen eines Stromflusses auf der mit dem mindestens einen Trennschalter (161, 175) verbundenen Leitung (L1) aufweist, und dass die Bestromungseinrichtung (40) zum Abschalten weiterer Leitungen (L2, L3) zwischen der Bestromungseinrichtung (40) und dem Antriebsmotor (100) in Abhängigkeit von einem Stromfluss über die mit dem mindestens einen Trennschalter (161, 175) verbundene Leitung (L1) ausgestaltet ist.

2. Hand-Werkzeugmaschine nach Anspruch 1, **dadurch gekennzeichnet, dass** der mindestens eine Trennschalter (161, 175) einen thermisch betätigbaren Schalter, insbesondere einen Bimetall-Schalter, umfasst oder bildet, der in Abhängigkeit von einer vorbestimmten Temperatur die Leitung (L1) von der ihr zugeordneten Phase (P1, P2, P3) trennt.

3. Hand-Werkzeugmaschine nach Anspruch 1 oder 2, **dadurch gekennzeichnet, dass** der mindestens eine Trennschalter (161, 175) einen elektrisch betätigbaren Schalter umfasst oder bildet, der bei Überschreiten einer vorbestimmten Spannung und/oder eines vorbestimmten Stromflusses die Leitung (L1) von der ihr zugeordneten Phase (P1, P2, P3) trennt.

4. Hand-Werkzeugmaschine nach einem der vorhergehenden Ansprüche, **dadurch gekennzeichnet, dass** der mindestens eine Trennschalter (161, 175) zum Trennen elektrischer Verbindungen zwischen mindestens zwei elektrischen Leitungen (L1, L2, L3) der Leitungsanordnung (41) und der über diese Leitungen (L1, L2, L3) mit Strom versorgbaren Phasen (P1, P2, P3) der Erregerspulenanordnung (120) ausgestaltet ist.

5. Hand-Werkzeugmaschine nach einem der vorhergehenden Ansprüche, **dadurch gekennzeichnet, dass** der mindestens eine Trennschalter (161, 175) einen Bestandteil einer Anordnung von mindestens zwei Trennschaltern (161, 175) bildet, die in Reihe hintereinander zwischen die Leitung (L1) und die ihr zugeordnete Phase (P1, P2, P3) geschaltet sind oder die mit unterschiedlichen Phasen (P1, P2, P3) der Erregerspulenanordnung (120) verbunden sind, wobei vorteilhaft vorgesehen ist, dass die Anordnung von Trennschaltern (161, 175) mindestens zwei Trennschalter (161, 175) umfasst, von denen ein Trennschalter (161, 175) durch eine erste physikalische Einwirkung, insbesondere Temperatur, und der andere Trennschalter (161, 175) durch eine zweite physikalische Einwirkung, insbesondere eine elektrische Einwirkung, betätigbar sind.

6. Hand-Werkzeugmaschine nach einem der vorhergehenden Ansprüche, **dadurch gekennzeichnet, dass** der mindestens eine Trennschalter (161, 175) an einem Stator (110), insbesondere einem Blechpaket (111B), des Antriebsmotors (100) angeordnet ist.

7. Hand-Werkzeugmaschine nach einem der vorhergehenden Ansprüche, **dadurch gekennzeichnet, dass** der mindestens eine Trennschalter (161, 175) in einem Schutzgehäuse (162) angeordnet ist, wobei vorteilhaft vorgesehen ist, dass das Schutzgehäuse (162) ein thermisch leitfähiges Gehäuseteil (163A) an seiner dem Antriebsmotor (100) zugewandten Seite und/oder ein thermisch isolierendes Gehäuseteil (163B) an seiner von dem Antriebsmotor (100) abgewandten Seite aufweist, zwischen denen der Trennschalter (161, 175) angeordnet ist.

8. Hand-Werkzeugmaschine nach einem der vorhergehenden Ansprüche, **dadurch gekennzeichnet, dass** der Trennschalter (161, 175), insbesondere ein oder das Schutzgehäuse (162), an einer von dem Antriebsmotor (100) abgewandten Seite thermisch und/oder elektrisch isoliert ist und/oder dass zwischen dem Trennschalter (161, 175) und einer elektrischen oder mechanischen Komponente, insbesondere des Stators (110), des Antriebsmotors (100) ein Wärmeleitelement (169) angeordnet ist.

9. Hand-Werkzeugmaschine nach einem der vorhergehenden Ansprüche, **dadurch gekennzeichnet, dass** der Trennschalter (161, 175) durch eine Federanordnung (168) in Richtung einer Komponente des Antriebsmotors (100), insbesondere des Stators (110), belastet ist und/oder zwischen dem Trennschalter (161, 175) und der Komponente des Antriebsmotors (100) ein Ausgleichsmittel zum Herstellen eines im Wesentlichen vollflächigen Kontaktes zwischen dem Trennschalter (161, 175) und der Komponente vorgesehen ist.

10. Hand-Werkzeugmaschine nach einem der vorhergehenden Ansprüche, **dadurch gekennzeichnet, dass** der Antriebsmotor (100) ein bürstenloser Motor ist.

11. Hand-Werkzeugmaschine nach einem der vorhergehenden Ansprüche, **dadurch gekennzeichnet, dass** der Bearbeitungskopf (11) an dem Handgriffelement (12) über eine Gelenkanordnung (13) beweglich gelagert ist.

12. Hand-Werkzeugmaschine nach einem der vorhergehenden Ansprüche, **dadurch gekennzeichnet, dass** das Handgriffelement (12) einen Griffstab umfasst oder stabförmig ist und/oder dass die Bestromungseinrichtung (40) an dem Handgriffelement (12) angeordnet ist und/oder dass die Bestromungseinrichtung (40) und der Bearbeitungskopf (11) an einander entgegengesetzten Endbereichen des Handgriffelements (12) angeordnet sind.

13. Hand-Werkzeugmaschine nach einem der vorhergehenden Ansprüche, **dadurch gekennzeichnet, dass** die Leitungsanordnung (41) entlang des Handgriffelements (12), insbesondere in einem Innenraum des Handgriffelements (12), geführt und/oder angeordnet ist und/oder dass die Leitungsanordnung (41) ausschließlich zur Bestromung des Antriebsmotors (100) vorgesehene Leitungen (L1, L2, L3) umfasst.

14. Hand-Werkzeugmaschine nach einem der vorhergehenden Ansprüche, **dadurch gekennzeichnet, dass** die Erregerspulenanordnung (120) des Antriebsmotors (100) mehrere Erregerspulen (121) aufweist, wobei der elektrische Trennschalter (161) den einzigen am Antriebsmotor (100) angeordneten Trennschalter zum Trennen einer Verbindung zwischen der Bestromungseinrichtung (40) und dem Antriebsmotor (100) bildet.

## Claims

1. Hand-held machine tool, in particular a sanding machine, comprising a handle element (12) for the user to grip and a machining head (11) which has an electric drive motor (100) for driving a tool holder (19) provided for holding a machining tool (20), the hand-held machine tool having a power supply device (40) for supplying power to the drive motor (100) by means of a line arrangement (41), via which the drive motor (100) and power supply device (40) are interconnected, wherein a protective circuit comprising at least one electrical disconnector (161, 175) is arranged in the drive motor (100), in order to isolate a connection between at least one electrical conductor (L1) of the line arrangement (41) and a phase (P1, P2, P3) of an exciter coil arrangement (120) of the drive motor (100), which phase can be supplied with current via said conductor (L1), **characterised in that** the power supply device (40) has a current monitoring device (171) for detecting a current flow on the conductor (L1) connected with the at least one disconnector (161, 175), and **in that** the power supply device (40) is designed for disconnecting further conductors (L2, L3), as a function of a current flow over the conductor (L1) connected with the at least one disconnector (161, 175).

2. Hand-held machine tool according to claim 1, **characterised in that** the at least one disconnector (161, 175) comprises or forms a thermally operable switch, in particular a bimetal switch, which isolates the conductor (L1) from the phase (P1, P2, P3) associated with it, as a function of a predetermined temperature.

3. Hand-held machine tool according to claim 1 or 2, **characterised in that** the at least one disconnector (161, 175) comprises or forms an electrically operable switch, which in the event of exceeding a predefined voltage and/or a predefined current flow, isolates the conductor (L1) from its associated phase (P1, P2, P3).

4. Hand-held machine tool according to any one of the preceding claims, **characterised in that** the at least one disconnector (161, 175) is designed for isolating electrical connections between at least two electrical conductors (L1, L2, L3) of the line arrangement (41) and a phase (P1, P2, P3) that can be supplied with current via these conductors (L1, L2, L3) of an exciter coil arrangement (120).

5. Hand-held machine tool according to any one of the preceding claims, **characterised in that** the at least one disconnector (161, 175) forms a component of an arrangement of at least two disconnectors (161, 175), which are connected in series one behind the other between the conductor (L1) and the phase (P1, P2, P3) associated with them or are connected with various phases (P1, P2, P3) of the exciter coil arrangement (120), wherein it is advantageously provided that the arrangement of disconnectors (161, 175) comprises at least two disconnectors (161, 175), of which one disconnector (161, 175) is operable by a first physical influence, in particular temperature, and the other disconnector (161, 175) is operable by a second physical influence, in particular an electrical influence.

6. Hand-held machine tool according to any one of the preceding claims, **characterised in that** the at least one disconnector (161, 175) is arranged on a stator (110), in particular a laminated core (111B), of the drive motor (100).

7. Hand-held machine tool according to any one of the preceding claims, **characterised in that** the at least one disconnector (161, 175) is arranged in a protective housing (162), wherein it is advantageously provided that the protective housing (162) has a thermally insulating housing part (163A) on its side facing towards the drive motor (100) and/or a thermally insulating housing part (163B) on its side facing away from the drive motor (100), between which the disconnector (161, 175) is arranged.

8. Hand-held machine tool according to any one of the preceding claims, **characterised in that** the disconnector (161, 175), in particular a or the protective housing, is thermally and/or electrically insulated on its side facing away from the drive motor (100) and/or **in that** between the disconnector (161, 175) and an electrical or mechanical component, in particular of the stator (110), of the drive motor (100) a heat sink (169) is arranged.

9. Hand-held machine tool according to any one of the preceding claims, **characterised in that** the disconnector (161, 175) is loaded by a spring arrangement (168) in the direction of a component of the drive motor (100), in particular of the stator (110) and/or between the disconnector (161, 175) and the component of the drive motor (100) a compensating means is provided for creating a substantially full surface contact between the disconnector (161, 175) and the component.

10. Hand-held machine tool according to any one of the preceding claims, **characterised in that** the drive motor (100) is a brushless motor.

11. Hand-held machine tool according to any one of the preceding claims, **characterised in that** the machining head (11) is movably mounted on the handle element (12) by means of a joint assembly (13).

12. Hand-held machine tool according to any one of the preceding claims, **characterised in that** the handle element (12) comprises a grip rod or is rod-shaped and/or **in that** the power supply device (40) is arranged on the handle element (12) and/or **in that** the power supply device (40) and the machining head (11) are arranged on opposing end regions of the handle element (12).

13. Hand-held machine tool according to any one of the preceding claims, **characterised in that** the line arrangement (41) is run and/or arranged along the handle element (12), in particular in an interior space of the handle element (12) and/or **in that** the line arrangement (41) comprises conductors (L1, L2, L3) exclusively provided for supplying power to the drive motor (100).

14. Hand-held machine tool according to any one of the preceding claims, **characterised in that** the exciter coil arrangement (120) of the drive motor (100) has a plurality of exciter coils (121), wherein the electrical disconnector (161) forms the sole disconnector arranged on the drive motor (100) for isolating a connection between the power supply device (40) and the drive motor (100) and/or on the drive motor (100) no further disconnector for isolating a connection between the power supply device (40) and the drive motor (100) is arranged.

## Revendications

1. Machine-outil portative, en particulier rectifieuse, comportant un élément de poignée (12) destiné à être saisi par un opérateur et une tête d'usinage (11), qui comporte un moteur d'entraînement électrique (100) destiné à entraîner un porte-outil (19) prévu pour maintenir un outil d'usinage (200), la machine-outil portative possédant un dispositif d'alimentation électrique (40) destiné à alimenter électriquement le moteur d'entraînement (100) par l'intermédiaire d'un arrangement de lignes (41) par le biais duquel le moteur d'entraînement (100) et le dispositif d'alimentation électrique (40) sont reliés l'un à l'autre, un circuit de protection étant disposé sur le moteur d'entraînement (100), lequel comprend au moins un sectionneur électrique (161, 175) destiné à couper une liaison entre au moins une ligne électrique (L1) de l'arrangement de lignes (41) et une phase (P1, P2, P3), pouvant être alimentée électriquement par le biais de cette ligne (L1), d'un arrangement de bobines d'excitation (120) du moteur d'entraînement (100), **caractérisée en ce que** le dispositif d'alimentation électrique (40) possède un dispositif de surveillance du courant (171) destiné à reconnaître un flux de courant sur la ligne (L1) reliée à l'au moins un sectionneur (161, 175), et **en ce que** le dispositif d'alimentation électrique (40) est configuré pour déconnecter des lignes supplémentaires (L2, L3) entre le dispositif d'alimentation électrique (40) et le moteur d'entraînement (100) en fonction d'un flux de courant par la ligne (L1) reliée à l'au moins un sectionneur (161, 175).

2. Machine-outil portative selon la revendication 1, **caractérisée en ce que** l'au moins un sectionneur (161, 175) comporte ou forme un interrupteur pouvant être actionné thermiquement, en particulier un interrupteur bimétallique, qui coupe la ligne (L1) de la phase (P1, P2, P3) qui lui est associée en fonction d'une température prédéterminée.

3. Machine-outil portative selon la revendication 1 ou 2, **caractérisée en ce que** l'au moins un sectionneur (161, 175) comporte ou forme un interrupteur pouvant être actionné électriquement, qui coupe la ligne (L1) de la phase (P1, P2, P3) qui lui est associée en cas de dépassement d'une tension prédéterminée et/ou d'un flux de courant prédéterminé.

4. Machine-outil portative selon l'une des revendications précédentes, **caractérisée en ce que** l'au moins un sectionneur (161, 175) est configuré pour couper des liaisons électriques entre au moins deux lignes électriques (L1, L2, L3) de l'arrangement de lignes (41) et les phases (P1, P2, P3) de l'arrangement de bobines d'excitation (120) pouvant être alimentées en courant par le biais de ces lignes (L1, L2, L3).

5. Machine-outil portative selon l'une des revendications précédentes, **caractérisée en ce que** l'au moins un sectionneur (161, 175) forme un élément constitutif d'un arrangement d'au moins deux sectionneurs (161, 175), qui sont branchés en série l'une après l'autre entre la ligne (L1) et la phase (P1, P2, P3) qui lui est associée ou qui sont reliés à des phases différentes (P1, P2, P3) de l'arrangement de bobines d'excitation (120), en prévoyant avantageusement que l'arrangement de sectionneurs (161, 175) comporte au moins deux sectionneurs (161, 175), dont un sectionneur (161, 175) peut être actionné par un premier effet physique, notamment la température, et l'autre sectionneur (161, 175) par un deuxième effet physique, notamment un effet électrique.

6. Machine-outil portative selon l'une des revendications précédentes, **caractérisée en ce que** l'au moins un sectionneur (161, 175) est disposé sur un stator (110), en particulier un paquet de tôles (111B), du moteur d'entraînement (100).

7. Machine-outil portative selon l'une des revendications précédentes, **caractérisée en ce que** l'au moins un sectionneur (161, 175) est disposé dans un boîtier de protection (162), en prévoyant avantageusement que boîtier de protection (162) possède, sur son côté orienté vers le moteur d'entraînement (100), une partie de boîtier thermoconductrice (163A) et/ou, sur son côté orienté à l'opposé du moteur d'entraînement (100), une partie de boîtier thermiquement isolante (163B), entre lesquelles est disposé le sectionneur (161, 175).

8. Machine-outil portative selon l'une des revendications précédentes, **caractérisée en ce que** le sectionneur (161, 175), en particulier un ou le boîtier de protection (162), est isolé thermiquement et/ou électriquement sur un côté orienté à l'opposé du moteur d'entraînement (100) et/ou **en ce qu'**un élément conducteur de chaleur (169) est disposé entre le sectionneur (161, 175) et un composant électrique ou mécanique, en particulier le stator (110), du moteur d'entraînement (100).

9. Machine-outil portative selon l'une des revendications précédentes, **caractérisée en ce que** le sectionneur (161, 175) est sollicité par un arrangement à ressort (168) en direction d'un composant du moteur d'entraînement (100), en particulier du stator (110), et/ou entre le sectionneur (161, 175) et le composant du moteur d'entraînement (100) est prévu un moyen de compensation destiné à établir un contact sensiblement sur toute la surface entre le sectionneur (161, 175) et le composant.

10. Machine-outil portative selon l'une des revendications précédentes, **caractérisée en ce que** le moteur d'entraînement (100) est un moteur sans balai.

11. Machine-outil portative selon l'une des revendications précédentes, **caractérisée en ce que** la tête d'usinage (11) est montée mobile sur l'élément de poignée (12) par l'intermédiaire d'un arrangement d'articulation (13).

12. Machine-outil portative selon l'une des revendications précédentes, **caractérisée en ce que** l'élément de poignée (12) comporte une tige de préhension ou est en forme de tige et/ou **en ce que** le dispositif d'alimentation électrique (40) est disposé sur l'élément de poignée (12) et/ou **en ce que** le dispositif d'alimentation électrique (40) et la tête d'usinage (11) sont disposés à des zones d'extrémité opposées de l'élément de poignée (12).

13. Machine-outil portative selon l'une des revendications précédentes, **caractérisée en ce que** l'arrangement de lignes (41) passe et/ou est disposé le long de l'élément de poignée (12), en particulier dans un espace intérieur de l'élément de poignée (12), et/ou **en ce que** l'arrangement de lignes (41) comporte exclusivement des lignes (L1, L2, L3) prévues pour l'alimentation électrique du moteur d'entraînement (100).

14. Machine-outil portative selon l'une des revendications précédentes, **caractérisée en ce que** l'arrangement de bobines d'excitation (120) du moteur d'entraînement (100) possède plusieurs bobines d'excitation (121), le sectionneur électrique (161) formant l'unique sectionneur disposé sur le moteur d'entraînement (100) pour couper une liaison entre le dispositif d'alimentation électrique (40) et le moteur d'entraînement (100).
